(19) Europäisches Patentamt
European Patent Office
Office européen des brevets

(11) EP 3 166 782 B1

(12) **EUROPEAN PATENT SPECIFICATION**

(45) Date of publication and mention of the grant of the patent:
**20.02.2019 Bulletin 2019/08**

(21) Application number: **15734638.8**

(22) Date of filing: **01.07.2015**

(51) Int Cl.:
***B32B 5/14*** *(2006.01)* ***B32B 7/02*** *(2019.01)*
***B32B 27/00*** *(2006.01)*

(86) International application number:
**PCT/EP2015/064958**

(87) International publication number:
**WO 2016/005241 (14.01.2016 Gazette 2016/02)**

(54) **A SHEET-LIKE COMPOSITE, ESPECIALLY FOR CONTAINERS, WITH AN ADHESION-PROMOTING LAYER CHARACTERISED BY DIFFERENT C=0 GROUP ABSORPTION MAXIMA**

FLÄCHENFÖRMIGER VERBUND, INSBESONDERE FÜR BEHÄLTER, MIT EINER DURCH VERSCHIEDENE C=O-GRUPPENABSORPTIONSMAXIMA GEKENNZEICHNETEN HAFTVERMITTLERSCHICHT

COMPOSITE EN FEUILLE, EN PARTICULIER POUR DES RÉCEPTACLES, COMPORTANT UNE COUCHE FAVORISANT L'ADHÉSION CARACTÉRISÉE PAR DIFFÉRENTS MAXIMA D'ABSORPTION DE GROUPE C=O

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2014 DE 102014010016**

(43) Date of publication of application:
**17.05.2017 Bulletin 2017/20**

(73) Proprietor: **SIG Technology AG**
**8212 Neuhausen (CH)**

(72) Inventors:
- **OCHSMANN, Jannis**
  **50226 Frechen (DE)**
- **BISCHOFF, Jörg**
  **52441 Linnich (DE)**

(74) Representative: **Herzog, Fiesser & Partner Patentanwälte PartG mbB**
**Immermannstrasse 40**
**40210 Düsseldorf (DE)**

(56) References cited:
**DE-B4-102010 033 466** **US-A1- 2009 263 629**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention concerns a sheet-like composite comprising an adhesion-promoting layer, comprising an outer surface adhesion-promoting layer and an inner surface adhesion-promoting layer, wherein the outer surface adhesion-promoting layer is characterised by a first C=O group absorption maximum, wherein the inner surface adhesion-promoting layer is characterised by a second C=O group absorption maximum, wherein the first C=O group absorption maximum is higher than the second C=O group absorption maximum; a process for producing a sheet-like composite; a container precursor; a process for producing a container precursor; a container; a use for the sheet-like composite; and a use for the container.

Food preservation has been taking place for a long time, be it food products for human consumption or also food products for animals, with these being stored either in a tin or in a glass jar which is sealed by means of a lid. Durability can hereby be increased, with both the food products and the container, in this case either glass jar or tin, being sterilised as much as possible and the food product being afterwards filled into the container, which is finally sealed. These measures have proven to increase the durability of food products for a long time, but they also have a number of disadvantages; for example, a further necessary downstream sterilisation. Tins and glass jars have the disadvantage that due to their essentially cylindrical shape, it is not possible to store them in a very dense and space-saving manner. Furthermore, tins and glass jars have a considerable net weight, which leads to increased energy expenditure during transportation. In addition, a fairly large amount of energy is required for the production of glass, tin or aluminium, even if the raw materials used for this purpose come from recycled sources. In the case of glass jars, increased transportation costs are an additional problem. Glass jars are usually prefabricated at glassworks and must then be transported in considerable transportation volumes to the food product filling plant. Moreover, glass jars and tins can only be opened using considerable force or with the help of tools, in a rather cumbersome process. In the case of tins, there is a high added risk of injury due to the sharp edges resulting from the opening process. In the case of glass jars, it is often the case that during the filling or opening process of the filled glass jars, glass shards find their way into the food product, which in a worst case scenario may lead to internal injuries when consuming the food product. In addition, both tins and glass jars require labels to be pasted on them in order to identify and advertise the food product contained therein. Information and advertising illustrations cannot be printed directly onto glass jars and tins. Thus, in addition to the actual printing process, a substrate for this purpose, i.e. paper or a suitable film, as well as a fixing agent, an adhesive or a sealing agent, are also required.

Other state-of-the-art packaging systems to store food products for as long as possible without adverse effects are also well known. These consist of containers manufactured from sheet-like composites, often referred to as laminates. Such sheet-like composites are often made up of a thermoplastic layer, a carrying layer mostly consisting of cardboard or paper, an adhesion-promoting layer, a barrier layer and an additional plastic layer, as disclosed, inter alia, in WO 90/09926 A2.

These laminate containers already have many advantages compared to conventional glass jars and tins. Nonetheless, there are also opportunities for improvements in these packaging systems. In state-of-the-art laminates, an additional adhesion-promoting layer is located between the barrier layer and the additional plastic layer. According to DE 10 2010 033 466 B4, the additional adhesion-promoting layer is intended to establish a fixed bond with the barrier layer, for example by forming chemical bonds. This is in order to prevent the delamination of the additional plastic layer from the barrier layer. This is particularly critical because the additional plastic layer comes into contact with the food product filled into the laminated container, and therefore a high degree of impermeability and the best possible sterility of the additional plastic layer should be ensured. In order to achieve the best possible adhesion of the additional adhesion-promoting layer to the barrier layer, the additional adhesive layer in DE 10 2010 033 466 B4 contains functionalised polyolefins which have been obtained by co-polymerisation of ethylene with acrylic acid, acrylates, acrylate derivatives or double-bonded carboxylic anhydrides. In WO 98/26994 A1 the additional adhesion-promoting layer includes an ethylene acrylic acid co-polymer. This makes the manufacture of the plastic of the additional adhesion-promoting layer relatively more expensive and elaborate. This has a particular repercussion in that the additional adhesion-promoting layer should have sufficient thickness and should preferably be thicker than the additional plastic layer.

In general terms, the objective of the present invention is to at least partially overcome a disadvantage which arises from the prior state-of-the-art technology. Another objective of the invention is to provide a food container, wherein this is made of a laminate which is less expensive while maintaining the same adhesive properties between the barrier layer and the inner polymer layer. Another objective of the invention is to provide a food container made of a laminate, wherein the durability of non-emulsified meat broths, in particular of ham broths or cashew apple juices, or of both is improved. Furthermore, it is an objective of the present invention to provide a food container made of a laminate that has a lower weight. A further objective of the invention is to provide a food container made of a laminate, wherein the food container features high stability or tightness, in particular for the storage of fatty and/or acidic foods, or both. Another objective of the invention is to provide a food container made of a laminate which can be produced by easy folding of the laminate, featuring a high tightness at the same time. The container should thus be particularly suitable for the long-term storage of sensitive, especially fatty and/or acidic, foods. Another objective of the invention is to provide a food container made of a laminate which is inexpensive or which can be manufactured in as few process steps as possible, or both. Another objective of the invention is to provide a food container made of a laminate with a combination of two or more of, but preferably all of the aforementioned advantages. Another objective of the invention is to solve one or a combination of at least two of the aforementioned objects without any another property of the food container deteriorating.

A contribution to at least the partial fulfilment of at least one of the above objects is achieved by the independent claims. The dependent claims provide preferable embodiments which contribute to at least a partial fulfilment of at least one of the objects.

A contribution to the fulfilment of at least one of the objectives of the invention provides an embodiment 1 of a sheet-like composite 1, comprising as layers of a layer sequence:

a) an outer polymer layer,
b) a carrying layer following the outer polymer layer,
c) a barrier layer following the carrying layer,
d) an adhesion-promoting layer following the barrier layer, and
e) an inner polymer layer following the adhesion-promoting layer;

wherein the adhesion-promoting layer comprises an outer surface of the adhesion-promoting layer and an inner surface of the adhesion-promoting layer;
wherein the outer surface of the adhesion-promoting layer

i) is adjacent to the barrier layer, and
ii) is characterised by a first C=O group absorption maximum;

wherein the inner surface of the adhesion-promoting layer

A) is adjacent to the inner polymer layer,
B) is characterised by a second C=O group absorption maximum, and
C) has a first distance to the outer surface of the adhesion-promoting layer;

wherein the first C=O group absorption maximum is higher than the second C=O group absorption maximum.

An embodiment 2 of the sheet-like composite 1 pursuant to the invention is configured according to the embodiment 1, wherein the adhesion-promoting layer in a first layer level with a second distance from the outer surface adhesion promotion layer has a third C=O group absorption maximum;
wherein the second distance amounts to 5 to 95%, preferably of the first distance; wherein the third C=O group absorption maximum

a) is lower than the first C=O group absorption maximum, and
b) is higher than the second C=O group absorption maximum.

An embodiment 3 of the sheet-like composite 1 pursuant to the invention is configured according to the embodiments 1 or 2, wherein the first C=O group absorption maximum is in a range from 0.1 to 5, preferably from 0.2 to 4, more preferably from 0.3 to 3, more preferably 0.35 to 2.8, more preferably from 0.4 to 2.6, more preferably from 0.45 to 2.4, most preferably from 0.5 to 2.2.

An embodiment 4 of the sheet-like composite 1 pursuant to the invention is configured according to one of the embodiments 1 to 3, wherein the second C=O group absorption maximum is in a range from more than 0 to 1, preferably from 0.01 to 1, more preferably from 0.02 to 1, more preferably from 0.04 to 1, more preferably from 0.06 to 1, more preferably from 0.08 to 1, most preferably from 0.1 to 0.9.

An embodiment 5 of the sheet-like composite 1 pursuant to the invention is configured according to one of the embodiments 2 to 4, wherein the third C=O group absorption maximum is in a range from 0.015 to 4.5, preferably from 0.02 to 3.5, preferably from 0.05 to 2.5, preferably from 0.1 to 2, more preferably from 0.15 to 1.7, more preferably from 0.15 to 1.3, most preferably from 0.2 to 1.

An embodiment 6 of the sheet-like composite 1 pursuant to the invention is configured according to one of the embodiments 2 to 5, wherein the second distance is from 5 to 20%, preferably from 5 to 15%, more preferably from 5 to 12% of the first distance, wherein the third C=O group absorption maximum is within a range from 0.05 to 4.5, preferably from 0.1 to 4, more preferably from 0.2 to 3, more preferably from 0.3 to 2.5, more preferably from 0.35 to 2.2, more preferably from 0.4 to 2.2, most preferably from 0.4 to 2.

An embodiment 7 of the sheet-like composite 1 pursuant to the invention is configured according to one of the embodiments 2 to 5, wherein the second distance is from 50 to 95%, preferably from 60 to 95%, more preferably from 70 to 95%, more preferably from 80 to 95%, most preferably from 90 to 95 % of the first distance, wherein the third C=O group absorption maximum is in a range from 0.015 to 1.2, preferably from 0.02 to 1.2, preferably from 0.04 to 1.1, more preferably from 0.07 to 1.1, more preferably from 0.1 to 1.1, more preferably from 0.15 to 1.1, most preferably from 0.15 to 1.

An embodiment 8 of the sheet-like composite 1 pursuant to the invention is configured according to one of the embodiments 2 to 7, wherein the adhesion-promoting layer in an additional layer level with a third distance from the outer surface adhesion-promoting layer has a fourth C=O group absorption maximum; wherein the third distance is greater than the second distance; wherein the fourth C=O group absorption maximum

a) is lower than the third C=O group absorption maximum, and
b) is higher than the second C=O group absorption maximum.

An embodiment 9 of the sheet-like composite 1 pursuant to the invention is configured according to one of the preceding embodiments, wherein a C=O group absorption maximum of the adhesion-promoting layer along a straight line from the outer surface adhesion-promoting layer to the inner surface adhesion-promoting layer decreases in at least 2, preferably at least 3, more preferably at least 4, most preferably at least 5 steps.

An embodiment 10 of the sheet-like composite 1 pursuant to the invention is configured according to one of the preceding embodiments, wherein one element selected from the group consisting of the first C=O group absorption maximum, the second C=O group absorption maximum, the third C=O group absorption maximum, and the fourth C=O group absorption maximum, or a combination of at least two of them is an absorption maximum of C=O groups, wherein the C=O groups included are functional groups selected from the group consisting of carboxylic acid groups, a salt of the carboxylic acid groups, carboxylic anhydride groups, or a combination of at least two thereof.

An embodiment 11 of the sheet-like composite 1 pursuant to the invention is configured according to one of the embodiments 1 to 9, wherein one element selected from the group consisting of the first C=O group absorption maximum, the second C=O group absorption maximum, the third C=O group absorption maximum, and the fourth C=O group absorption maximum, or a combination of at least two of them is an absorption maximum of a functional group, wherein the functional group is a repeating unit based on a monomer selected from the group consisting of acrylic acid, a salt of the acrylic acid, methacrylic acid, a salt of the methacrylic acid, an acrylic acid ester, maleic acid, and maleic anhydride, or a combination of at least two thereof.

The above monomers are preferable used as co-monomers together with a main monomer, preferably with an unsaturated hydrocarbon, preferably with an alpha-olefin, preferably an alpha-olefin selected from the group consisting of ethylene, propylene, 1-butylene, 1-pentene, 1-hexene, 1-octene, 1-nonene, or a combination of at least two thereof, particularly preferred ethylene or propylene and especially preferred ethylene. It is further preferable that the polymer consists to 50 wt.-% or more, preferably 70 wt.-% or more and particularly preferred 85 wt.-% or more of the main monomer, based respectively on the polymer, and to less than 50 wt.-%, preferably less than 30 wt.-% and particularly preferred less than 15 wt.-% of the co-monomer, based respectively on the polymer.

An embodiment 12 of the sheet-like composite 1 pursuant to the invention is designed according to one of the preceding embodiments, wherein the inner polymer layer contains at least 30 wt.-%, preferably at least 40 wt.-%, more preferably at least 50 wt.-%, more preferably at least 60 wt.-%, more preferably at least 70 wt.-%, most preferably at least 75 wt.-%, based on the total weight of the inner polymer layer, of a polymer produced by means of a metallocene catalyst.

An embodiment 13 of the sheet-like composite 1 is designed according to one of the preceding embodiments, wherein the inner polymer layer comprises a mixture containing a polymer produced by means of a metallocene catalyst and an additional polymer. An additionally preferable polymer is a polyethylene (PE). A preferable PE is an LDPE. Preferably, the mixture comprises the further polymer from 1 to 70 wt.-%, preferably from 1 to 50 wt.-%, more preferably from 1 to 40 wt.-%, more preferably from 10 to 30 wt.-%, based respectively on the total weight of the mixture.

An embodiment 14 of the sheet-like composite 1 is designed according to one of the preceding embodiments, wherein the carrying layer preferably comprises one material selected from the group consisting of cardboard, paperboard, and paper, or a combination of at least two thereof.

An embodiment 15 of the sheet-like composite 1 is designed according to one of the preceding embodiments, wherein the barrier layer preferably comprises one material selected from the group consisting of a plastic, a metal, and a metal oxide, or a combination of at least two thereof. A preferable metal is aluminium. A preferable plastic is EVOH, a polyamide or a combination of both.

An embodiment 16 of the sheet-like composite 1 is designed according to one of the preceding embodiments, wherein the carrying layer comprises at least one hole, wherein the hole is covered by at least the carrying layer and at least the inner polymer layer as hole covering layers. Preferably, the hole is further covered with the adhesion-promoting layer or the polymeric outer layer or both.

An embodiment 17 of the sheet-like composite 1 is designed according to one of the preceding embodiments, wherein the first distance is greater, preferably by a factor in a range of 1.1 to 5, more preferably in a range from 1.2 to 4, more preferably in a range from 1.3 to 3.5, than a layer thickness of the inner polymer layer. Preferably, the first distance is a layer thickness of the adhesion-promoting layer.

An embodiment 18 of the sheet-like composite 1 is designed according to one of the preceding embodiments, wherein the sheet-like composite is rolled into a coil having at least 2, preferably at least 3, more preferably at least 4, more preferably at least 5, more preferably at least 10, most preferably at least 15 layers of the sheet-like composite. In the process, the sheet-like composite is preferably formed in one piece. The sheet-like composite is preferably rolled along the cross section of the coil in a spiral pattern.

A contribution to the fulfilment of at least one of the objectives of the invention provides an embodiment 1 of a method 1, comprising as process steps:

a) the provision of a composite precursor, comprising as layers of a layer sequence:

i) an outer polymer layer,
ii) a carrying layer following the outer polymer layer, and
iii) a barrier layer following the carrying layer;

b) superimposing an adhesion-promoting layer on the barrier layer on a side facing away from the carrying layer;
c) superimposing an inner polymer layer on the adhesion-promoting layer on a side facing away from the barrier layer;

wherein the adhesion-promoting layer comprises an outer surface of the adhesion-promoting layer and an inner surface of the adhesion-promoting layer;
wherein the outer surface of the adhesion-promoting layer

A) is adjacent to the barrier layer, and
B) is characterised by a first C=O group absorption maximum;

wherein the inner surface of the adhesion-promoting layer

I) is adjacent to the inner polymer layer,
II) is characterised by a second C=O group absorption maximum, and
III) has a first distance to the outer surface of the adhesion-promoting layer;

wherein the first C=O group absorption maximum is higher than the second C=O group absorption maximum. A preferable outer polymer layer is formed or arranged, or both according to an embodiment of the sheet-like composite 1. A preferable carrying layer is formed or arranged, or both according to an embodiment of the sheet-like composite 1. A preferable barrier layer is formed or arranged, or both according to an embodiment of the sheet-like composite. 1 A preferable adhesion-promoting layer is formed or arranged, or both according to an embodiment of the sheet-like composite 1. A preferable inner polymer layer is formed or arranged, or both according to an embodiment of the sheet-like composite 1.

An embodiment 2 of the process 1 pursuant to the invention is configured according to the embodiment 1, wherein the adhesion-promoting layer in a first layer level with a second distance from the outer surface adhesion-promoting layer has a third C=O group absorption maximum; wherein the second distance is from 5 to 95% of the first distance; wherein the third C=O group absorption maximum

a) is lower than the first C=O group absorption maximum, and
b) is higher than the second C=O group absorption maximum.

An embodiment 3 of the process 1 pursuant to the invention is configured according to the embodiment 1 or 2, wherein in process step b) or in process step c) or in both, superimposing comprises an extrusion.

An embodiment 4 of the process 1 pursuant to the invention is configured according to the embodiment 1 to 3, wherein the extrusion in process step b) comprises a co-extrusion of at least a first polymer melt, a second polymer melt, and a third polymer melt; wherein before process step b) the first polymer melt is produced from a first plurality of polymer particles, the second polymer melt is produced from a second plurality of polymer particles, and the third polymer melt is produced from a third plurality of polymer particles; wherein a C=O group absorption maximum of the first plurality of polymer particles is higher than a C=O group absorption maximum of the third plurality of polymer particles; wherein the C=O group absorption maximum of the third plurality of polymer particles is higher than a C=O group absorption maximum of the second plurality of polymer particles. A preferable plurality of polymer particles is a granulate. Preferably all pluralities of polymer particle are granulates. Preferably, the first, the second and the third plurality of polymer particles are based on functionalized polyolefins that have been obtained by co-polymerization of at least one unsaturated hydrocarbon as a main monomer, preferably of at least one alpha-olefin, particularly preferred of at least one alpha-olefin selected from the group consisting of or at least two thereof, particularly preferred ethylene or propylene and most preferred ethylene, and at least one co-monomer bearing a hetero-atom, preferably at least one ethylenically unsaturated monomer bearing at least one functional group selected the group consisting of a carboxylic acid group, a salt of a carboxylic acid group, a carboxylic anhydride group or a combination of at least two thereof, more preferably at least one co-monomer selected from a group consisting of acrylic acids such as acrylic acid, methacrylic acid, crotonic acid, acrylates, acrylate derivatives or double-bonded carboxylic anhydrides, such as maleic anhydride, and a combination of at least two thereof. In this context it is preferred that the polymer of the first polymer melt, the polymer of the second polymer melt and the polymer of the third polymer melt differ from each other with respect to the content of the co-monomer relative to the main monomer. In this context it is furthermore preferred that in process step b) the first polymer melt is applied onto the barrier layer, the third polymer melt is applied onto the layer of the first polymer melt and the second polymer melt is applied onto the layer of the third polymer melt, wherein the content of co-monomer relative to the main monomer in the polymer decreases from the first polymer melt over to the third polymer melt to the second polymer melt.

A contribution to the fulfilment of at least one of the objectives of the invention provides an embodiment 1 of a container precursor 1, including a sheet-like composite 1 according to one of one of its embodiments 1 to 17, or a sheet-like composite 2 according to its embodiment 1, wherein the sheet-like composite comprises at least one fold with at least two adjoining folded surfaces, wherein at least one portion of the at least two folded surfaces is connected by a seal with the respective other subsection.

A contribution to the fulfilment of at least one of the objectives of the invention provides an embodiment 1 of a method 1, comprising as process steps:

a) provision of the sheet-like composite 1 according to one of its embodiments 1 to 18, or the sheet-like composite 2 according to its embodiment 1;
b) folding of the sheet-like composite to form a fold with at least two adjoining folded surfaces; and
c) joining at least one subsection of the at least two folded surfaces to the respective other subsection by sealing.

An embodiment 2 of the process 2 pursuant to the invention is configured according to the embodiment 1, wherein at least one part of the sheet-like composite has a temperature in a range from 10 to 50°C, preferably from 15 to 45°C, more preferably from 20 to 40°C, during folding. A preferable folding method is cold folding or hot folding or both.

An embodiment 3 of the process 2 pursuant to the invention is configured according to the embodiment 1 or 2, wherein the sealing is performed by a selection of one of the group consisting of irradiation, contact with a hot solid material, inducing a mechanical vibration, and contact with a hot gas, or a combination of at least two of them. A hot solid material preferably has a temperature above the melting temperature of a sealing agent.

An embodiment 4 of the process 2 pursuant to the invention is designed according to the embodiments 1 to 3, wherein the sheet-like composite in process step a) has at least one crease and in process step b) folding is done along the crease. Preferably, the sheet-like composite comprises at least 2, preferably at least 3, more preferably at least 4, most preferably at least 10 creases.

A contribution to the fulfilment of at least one of the objectives of the invention provides an embodiment 1 of a closed container 1, wherein the container comprises the sheet-like composite 1 according to one of its embodiments 1 to 17, or the sheet-like composite 2 according to its folded embodiment 1.

A contribution to the fulfilment of at least one of the objectives of the invention provides an embodiment 1 of a process 3, comprising as process steps:

a) provision of the container precursor 1 according to its embodiment 1, or the container precursor 2 according to its embodiment 1; and
b) closing of the container precursor by means of a closing tool.

An embodiment 2 of the process 3 pursuant to the invention is designed according to the embodiment 1, wherein the container precursor is filled with a food product before closing. It is preferable for the container precursor to be a tubular structure with a fixed longitudinal seam. This tubular structure is laterally compressed, fixed and separated and formed into an open container by means of fold forming and sealing or gluing. The food product may already be filled in the container prior to fixing and prior to separating and fold forming of the bottom.

A contribution to the fulfilment of at least one of the objectives of the invention provides an embodiment 1 for a use 1 of the sheet-like composite 1 according to one of its embodiments 1 to 18, or of the sheet-like composite 2 according to its embodiment 1 for the manufacture of a container.

A contribution to the fulfilment of at least one of the objectives of the invention provides an embodiment 1 for a use 2 of the container 1 according to its embodiment 1, or of the container 2 according to its embodiment 1 for introducing a food product into the container.

Layer sequence

The layers of the layer sequence are joined together. The term "joined" or "composite" used here includes the adhesion of two objects going beyond Van der Waals forces of attraction. Unless otherwise indicated, in the layer sequence these layers can follow one another either indirectly, that is with one or at least two intermediate layers, or directly, that is without an intermediate layer. However, if layers or surfaces are adjacent to each other, there are no further layers between these layers or surfaces. In the case of the sheet-like composite, this means, for example, that the barrier layer is directly adjacent and thus directly joined to the adhesion-promoting layer. Furthermore, the outer polymer layer may be directly joined to the carrying layer, but there may also be additional items between them, for example in the form of additional polymer layers, wherein an adjacent joining is preferable. The formulation "Comprising a layer sequence" as used above, means that the layers specified are at least present in the composite of the invention in the specified order. This formulation does not necessarily mean that these layers are directly adjacent to each other.

Polymer layers

Subsequently, the term "Polymer layer" refers to the outer polymer layer and the inner polymer layer. A preferable polymer of the outer polymer layer or the inner polymer layer is a polyolefin. The polymer layers may comprise further components. The polymer layers are preferably introduced or applied to the sheet-like composite material by means of an extrusion process. The additional components of the polymer layers are preferably components which do not adversely affect the behaviour of the polymer melt during its application as a layer. The additional components may, for example, be inorganic compounds such as metal salts or other plastics such as other thermoplastic materials. However, it is also conceivable that the additional components are fillers or pigments such as carbon black or metal oxides. Suitable thermoplastic materials for the additional components are in particular those that are easy to apply due to their good extrusion behaviour. Among them, polymers obtained by chain polymerisation are suitable, in particular polyester or polyolefins, wherein cyclic olefin co-polymers (COC), polycyclic olefin copolymers (POC), in particular polyethylene and polypropylene are particularly preferable and polyethylene is most preferable. Among polyethylenes HDPE, MDPE, LDPE, LLDPE, VLDPE and PE as well as mixtures of at least two thereof are preferable. Mixtures of at least two thermoplastic materials also can be used. Suitable polymer layers have a melt flow rate (MFR - Melt Flow Rate) in a range from 1 to 25 g/10 min, preferably in a range from 2 to 20 g/10 min and particularly preferably in a range from 2.5 to 15 g/10min, and with a density in a range from 0.890 $g/cm^3$ to 0.980 $g/cm^3$, preferably in a range from 0.895 $g/cm^3$ to 0.975 $g/cm^3$, and more preferably in a range from 0.900 $g/cm^3$ to 0.970 $g/cm^3$. Polymer layers preferably have at least a melting temperature in a range from 80 to 155°C, preferably in a range from 90 to 145°C and especially preferable in a range of 95 to 135°C. Preferably, the sheet-like composite between the barrier layer and the carrying layer comprises a polymer layer, preferably a polyolefin layer, preferably a polyethylene layer. More preferably, the composite precursor comprises a polymer layer between the barrier layer and the carrying layer, preferably a polyolefin layer, preferably a polyethylene layer. The above specifications relating to the polymer layers also apply to these polymer layers of the composite and the composite precursor.

Outer polymer layer

For the outer polymer layer, all polymers deemed suitable by a person skilled in the art can be used for the sheet-like composite. The outer polymer layer, which usually has a layer thickness in a range from 5 to 25 $\mu$m, particularly preferably in a range from 8 to 20 $\mu$m and most preferably in a range from 10 to 18 $\mu$m, comprises in particular thermoplastic materials. In this context, preferred thermoplastic polymers are in particular those having a melting temperature in a range from 80 to 155°C, preferably in a range from 90 to 145°C and especially preferable in a range from 95 to 135°C.

Optionally, the outer polymer layer may also comprise an inorganic filler in addition to the thermoplastic polymer. All solid materials deemed suitable by a person skilled in the art may be used as in organic filler, preferably particulate solids leading, inter alia, to an improved heat distribution within the plastic and thus to a better sealability of the plastic. The average particle sizes determined by sieve analysis ($D_{50}$) of the inorganic solids are preferably in a range from 0.1 to 10 $\mu$m, preferably in a range from 0.5 to 5 $\mu$m and especially preferable in a range from 1 to 3 $\mu$m. Metal salts or oxides of bivalent or tetravalent metals should be preferably considered as inorganic solids. Sulfates or carbonates of calcium, barium or magnesium or titanium dioxide, preferably calcium carbonate, can be named as an example thereof. In this context, however, it is preferable that the outer polymer layer comprises at least a 60 vol.-%, preferably at least an 80% vol.-% and especially preferably at least a 95% vol.-% of thermoplastic polymer, based respectively on the outer polymer layer.

Polymers obtained by chain polymerisation, in particular polyolefins, wherein cyclic olefin copolymers (COC), polycyclic olefin copolymers (POC), and preferably polyethylene and polypropylene are particularly suitable as thermoplastic polymers for the outer polymer layer. Most preferably, the outer polymer layer comprises polyethylene. The melt flow rates (MFR - Melt Flow Rate) determined by means of DIN 1133 (190°C/2.16 kg) of the polymers that can also be present as a mixture of at least two thermoplastic polymers, are preferably in a range from 1 to 25 g/10 min, preferably in a range from 2 to 9 g/10 min and especially preferable in a range from 3.5 to 8 g/10 min.

Among the polyethlylenes, HDPE, MDPE, LDPE, LLDPE and PE as well as mixtures of at least two of these are preferable for the composite according to the invention. The MFR of these polymers determined by means of DIN 1133 (190°C /2.16 kg) are preferably in a range from 3 to 15 g/10 min, preferably in a range from 3 to 9 g/10 min and especially preferable in a range from 3.5 to 8 g/10 min. In connection with the outer polymer layer, it is preferable to use polyethylenes with a density (according to ISO 1183-1:2004) in a range from 0.912 to 0.950 g/cm$^3$, an MFR in a range from 2.5 to 8 g/10 min and a melting temperature (according to ISO 11357) in a range from 96 to 135°C. Further preferred polyethylenes in relation to the outer polymer layer preferably have a density (according to ISO 1183-1: 2004) in a range from 0.900 to 0.960 g/cm$^3$. Preferably, the outer polymer layer comprises an LDPE in a range from 50 to 95 wt.-%, or preferably in a range from 60 to 90 wt.-%, or preferably in a range from 70 to 85 wt.-%, respective to the total weight of the outer polymer layer. The outer polymer layer spreads out in its main direction of expansion in a sheet-like manner in the direction of the sheet-like composite. Thereby one of the surfaces of the main direction of expansion forms the surface of the outer polymer layer and the opposite surface, the lower surface of the outer polymer layer. The top surface and the bottom surface of the outer polymer layer are preferably disposed parallel to each other. Moreover, the top surface and the bottom surface may extend at least in a part of the expansion of the outer polymer surface at an angle to one another, preferably less than 90°, preferably less than 45°, or preferably less than 20°.

Inner polymer layer

The inner polymer layer is based on thermoplastic polymers, as initially described for the outer polymer layer, wherein the inner polymer layer may, like the outer polymer layer, comprise a particulate inorganic solid material. Preferably however, the inner polymer should comprise a thermoplastic polymer in an amount of at least 70 wt.-%, preferably at least 80 wt.-% and especially preferably at least 95 wt.-%, respective to the total weight of the inner polymer layer.

It is further preferable that the inner polymer layer comprises at least 30 wt.-%, particularly preferably at least 40 wt.-% and most preferably at least 50 wt.-%, respective to the total weight of the inner polymer layer of a polyolefin produced using a metallocene catalyst, preferably of a polyethylene produced using a metallocene catalyst (mPE). It is further preferable that the inner polymer layer comprises an mLLDPE.

Preferably, the polymer or the polymer mixture of the inner polymer layer should have a density (according to ISO 1183-1:2004) in a range from 0.900 to 0.930 g/cm$^3$, particularly preferably in a range from 0.900 to 0.920 g/cm$^3$ and most preferably in a range from 0.900 to 0.910 g/cm$^3$. The MFR (ISO 1133, 190°C/2.16 kg) is preferably in a range from 4 to 17 g/10 min, especially preferably in a range of 4.5 to 14 g/10 min and most preferably in a range from 6.5 to 10 g/10 min.

Polymer produced by means of a metallocene catalyst

A polymer produced by means of a metallocene catalyst is preferably a polyolefin produced by means of a metallocene catalyst, preferably a polyethylene (mPE) produced by means of metallocene catalyst. A preferred mPE is an mLLDPE.

Carrying layer

The carrier layer of the container according to the invention can conventionally be made of any material which appears to be suitable to the person skilled in the art for this purpose and which has an adequate strength and rigidity to give the container stability to the extent that in the filled state the container essentially retains its shape. In addition to a number of plastics, plant-based fibrous substances, in particular celluloses, preferably sized, bleached and/or non-bleached celluloses are preferred, paper and cardboard being particularly preferred. The weight per square metre of the carrier layer preferably lies in a range of from 120 to 450 g/m$^2$, particularly preferably in a range of from 130 to 400 g/m$^2$ and most preferably in a range of from 150 to 380 g/m$^2$. A preferred cardboard generally consists of one or more layers and can be coated on one or both sides with one or more top coats. A preferred cardboard also has a residual moisture content of less than 20 wt.-%, preferably from 2 to 15 wt.-% and particularly preferably from 4 to 10 wt.-% in relation to the total weight of the cardboard. A particularly preferred cardboard consists of several layers. Further preferably, the cardboard has, on the surface facing the environment, at least one, particularly preferably, however, at least two layers of a top layer, which is known to the person skilled in the art as "coat". In paper manufacturing "coat" mostly describes liquid phases containing inorganic solid particles, preferably solutions containing chalk, gypsum or clay, which are applied to the surface of the cardboard. A preferred cardboard also has a Scott Bond value in a range of from 100 to 360 $J/m^2$, preferably from 120 to 350 $J/m^2$ and particularly preferably from 135 to 310 $J/m^2$. Through the areas referred to above, it is possible to provide a composite out of which a container with a high degree of impermeability can be folded easily and with low tolerances.

Preferably, at least one polymer layer, more preferably the outer polymer layer or the inner polymer layer or both, or preferably all polymer layers have a melting temperature below the melting temperature of the barrier layer. This is especially valid if the barrier layer is made up of a polymer. Hereby the melting temperatures of at least one, preferably of at least the two polymer layers, in particular of the inner polymer layer and of the outer polymer layer, differ from the melting temperature of the barrier layer by at least 1 K, particularly preferably by at least 10 K, still more preferably by at least 50 K, and further preferably by at least 100 K. The difference in temperature should preferably be only chosen so high that a melting of the barrier layer does not occur, in particular a melting of the plastic barrier layer during folding.

Barrier layer

As a barrier layer, any material can be used which appears to be suitable to the person skilled in the art for this purpose, which has a sufficient barrier effect in particular against oxygen. The barrier layer is preferably chosen from:

a. a plastic barrier layer;
b. a metal layer;
c. a metal oxide layer; or
d. a combination if at least two out of a. to c.

If the barrier layer according to alternative a. is a barrier layer of plastic, it preferably contains at least 70 wt.-%, particularly preferably at least 80 wt.-% and most preferably at least 95 wt.-% of at least one plastic which is known to the person skilled in the art for this purpose in particular because of aroma and gas barrier properties which are suitable for packaging containers. Possible plastics, in particular thermoplastic plastics, here are plastics carrying N or O, both by themselves and in mixtures of two or more. According to the invention, it can prove advantageous for the barrier layer of plastic to have a melting temperature in a range of from more than 155 to 300°C, preferably in a range of from 160 to 280°C and particularly preferably in a range of from 170 to 270°C.

The barrier layer of plastic preferably has a surface weight in a range of from 2 to 120 $g/m^2$, preferably in a range of from 3 to 60 $g/m^2$, particularly preferably in a range of from 4 to 40 $g/m^2$ and further preferably from 6 to 30 $g/m^2$. Further preferably, the plastic barrier layer can be obtained by melting, for example by extrusion, in particular layer extrusion. The plastic barrier layer can also preferably be introduced into the sheet-like composite by lamination. A foil is preferably incorporated into the sheet-like composite. According to another embodiment, plastic barrier layers can also be chosen that can be obtained by separation from a solution or dispersion of plastics.

Suitable polymers are preferably those that have a weight average molecular weight determined by means of gel permeation chromatography (GPC) using light scattering in a range of from $3 \cdot 10^3$ to $1 \cdot 10^7$ g/mol, preferably in a range of from $5 \cdot 10^3$ to $1 \cdot 10^6$ g/mol and particularly preferably in a range of from $6 \cdot 10^3$ to $1 \cdot 10^5$ g/mol. Polyamide (PA) or polyethylene vinyl alcohol (EVOH) or a mixture thereof in particular are taken into consideration as suitable polymers.

Polyamides comprise all PAs that appear to be suitable to the person skilled in the art for the use according to the invention, in particular PA 6, PA 6.6, PA 6.10, PA 6.12, PA 11 or PA 12 or a mixture of at least two thereof, PA 6 and PA 6.6 being particularly preferred and PA 6 furthermore being preferred. PA 6 for example, is commercially obtainable under the trade names of Akulon®, Durethan® and Ultramid®. Also suitable are amorphous polyamides such as MXD6, Grivory® and Selar® PA, for example. It is also preferable that the PA has a density in a range of from 1.01 to 1.40 $g/cm^3$, preferably in a range of from 1.05 to 1.30 $g/cm^3$ and more preferably in a range of from 1.08 to 1.25 $g/cm^3$. It is also preferable for the PA to have a viscosity number in a range of from 130 to 185 ml/g and preferably in a range of from 140 to 180 ml/g.

Possible EVOHs are all EVOHs that appear to be suitable to the person skilled in the art for the use according to the invention. Examples include those commercially obtainable under the trade names EVAL™ marketed by EVAL Europe NV, Belgium in a plurality of different embodiments, for example the varieties EVAL™ F104B or EVAL™ LR171B. Preferred EVOHs have at least one, two, several or all of the following properties:

- an ethylene content in a range of from 20 to 60 mol-%, preferably from 25 to 45 mol-%;
- a density in a range of from 1.0 to 1.4 $g/cm^3$, preferably from 1.1 to 1.3 $g/cm^3$;
- a melting point in a range of from more than 155 to 235°C, preferably from 165 to 225°C;
- an MFR value (210°C/2.16 kg, if $T_{S(EVOH)} < 230°C$; 230°C/2.16 kg, if $210°C < T_{S(EVOH)} < 230°C$) in a range of from 1 to 25 g/10 min, preferably from 2 to 20 g/10 min;

- an oxygen permeation rate in a range of from 0.05 to 3.2 $cm^3 \cdot 20\ \mu m/m^2 \cdot day \cdot atm$, preferably in a range of from 0.1 to 1 $cm^3 \cdot 20\ gm/m^2 \cdot day \cdot atm$.

According to alternative b. the barrier layer is a layer of metal. In principle, all metals that are known to the person skilled in the art which can create a high degree of impermeability to light and oxygen are suitable as a metal layer. According to a preferred embodiment, the metal layer can be present as a foil or as a deposited layer, for example after physical vapour deposition. The metal layer is preferably a continuous layer. According to a further preferred embodiment, the metal layer has a thickness in a range of from 3 to 20 $\mu m$, preferably in a range of from 3.5 to 12 $\mu m$ and particularly preferably in a range of from 4 to 10 $\mu m$.

Chosen metals are preferably aluminium, iron or copper. An iron layer can preferably be a steel layer, for example in the form of a film. The metal layer is preferably a layer with aluminium. The aluminium layer can expediently consist of an aluminium alloy, for example AlFeMn, AlFe1.5Mn, AlFeSi or AlFeSiMn. Its purity is normally 97.5% and higher, preferably 98.5% and higher, both figures relating to the total aluminium layer. In a special embodiment, the metal layer consists of an aluminium foil. Suitable aluminium foils have an elasticity of more than 1%, preferably of more than 1.3% and particularly preferably of more than 1.5%, and a tensile strength of more than 30 $N/mm^2$, preferably of more than 40 $N/mm^2$ and particularly preferably of more than 50 $N/mm^2$. In the pipette test, suitable aluminium foils have a droplet size of more than 3 mm, preferably of more than 4 mm and particularly preferably of more than 5 mm. Suitable alloys for the production of aluminium layers or foils can be commercially obtained under the configurations EN AW 1200, EN AW 8079 or EN AW 8111 marketed by Hydro Aluminium Deutschland GmbH or Amcor Flexibles Singen GmbH. In the case of a metal foil as a barrier layer, an adhesion-promoting layer can be provided on one and/or both sides of the metal foil between the metal foil and an adjacent polymer layer.

According to alternative c. a metal oxide layer can preferably be chosen as a barrier layer. All metal oxides layers which are familiar to the person skilled in the art and appear suitable for achieving a barrier effect against light, vapour and/or gas are taken into consideration as metal oxides layers. Metal oxides layers based on the aforementioned metals - aluminium, iron or copper - as well as metal oxide layers based on titanium or silicon oxide compound are particularly preferred. A metal oxide layer is generated, for example, by coating a plastic layer, for example an oriented polypropylene film, with metal oxide by means of vapour deposition. A preferred process is physical vapour deposition.

According to a further preferred embodiment, the metal layer of the metal oxide layer can be a layer composite constructed of one or more plastic layers with a metal layer. Such a layer is generated, for example, by coating a plastic layer, for example an oriented polypropylene film, with metal by means of vapour deposition. A preferred process is physical vapour deposition.

Hole / opening aid

To facilitate the openability of the container or the sheet-like composite according to the invention, the carrying layer may comprise at least one hole. In a particular embodiment, the hole is covered by at least the barrier layer and at least the inner polymer layer as hole covering layers. Preferred is a sheet-like composite wherein the carrying layer comprises at least one hole, which is covered by at least the barrier layer and at least the inner polymer layer, and the adhesion-promoting layer. It is hereby preferable that the hole-covering layers are joined to each other at least partially, preferably at least 30%, particularly preferably at least 70%, and especially preferably at least 90% through the surface formed by the hole. In a particular embodiment, it is preferable that the hole penetrates the entire composite and is covered by a hole-sealing closure or opening device. In connection with a first preferred embodiment, the hole provided in the carrying layer, may have a suitable form appropriate for different closures, drinking straws or opening-aid devices known to the person skilled in the art. Usually, the opening of a sheet-like composite or of a container with a sheet-like composite is done by means of at least the partial destruction of the hole-covering layers covering the hole. This destruction can be carried out by cutting, pressing into the container or pulling out from the container. The destruction can be carried out by means of an openable closure or a drinking straw which is pushed through the hole-covering layers covering the hole, usually arranged above the hole.

According to a further preferred embodiment, the carrying layer of the composite comprises a plurality of holes in the form of a perforation, wherein the individual holes are covered with at least the barrier layer and the inner polymer layer as hole-covering layers. A container made of such a composite can then be opened by tearing along the perforation. Such holes for perforations are preferably generated by means of a laser. The use of laser beams is particularly preferred when a metal foil or a metallised foil is used as a barrier layer. It is also possible for the perforation to be introduced by mechanical perforation tools, usually featuring blades.

According to a further preferred embodiment, the sheet-like composite is subjected in the area of at least the single hole to a thermal treatment; in the case of several holes present in the form of a perforation in the carrying layer, it is particularly preferable to also perform this thermal treatment around the edge of the hole. The thermal treatment can be carried out by means of radiation, hot gas, a solid thermal contact, mechanical vibrations, preferably by ultrasound or by a combination of at least two of these measures. Especially preferably, the thermal treatment is carried out by means of radiation, preferably by electromagnetic radiation and particularly preferably by electromagnetic induction or also by means of hot gas. The optimum operating parameters to be selected in each case are known to the average person skilled in the art.

In the case of radiation, any radiation type suitable to soften plastics known to the person skilled in the art can be considered. Preferred types of radiation are IR, UV rays, and microwaves. Preferred modes of vibration are ultrasonics. In the case of IR rays, which are also used for IR-welding of sheet-like composites, wavelengths ranging from 0.7 to 5 μm are to be mentioned. Furthermore, it is possible to use laser beams in a wavelength range from 0.6 to less than 1.6 μm. In connection with the use of IR-rays, these are produced by various suitable emitters known to the person skilled in the art. Short wave emitters in the range from 1 to 1.6 μm are preferably halogen spotlights. Medium wave emitters in the range from > 1.6 to 3.5 μm are, for example, metal foil emitters. Quartz heaters are often used as long wave emitters in the range of > 3.5μm. Lasers are used more and more often. Thus, diode lasers in a wavelength range from 0.8 to 1μm, Nd:YAG lasers at about 1 μm and $CO_2$ lasers at about 10.6 μm are used. High-frequency techniques with a frequency range from 10 to 45 MHz, often in a power range from 0.1 to 100 kW are also used.

In the case of ultrasound, the following treatment parameters are preferred:

P1 a frequency in a range from 5 to 100 kHz, preferably in a range from 10 to 50 kHz, and especially preferably in a range from 15 to 40 kHz;

P2 an amplitude in the range from 2 to 100 μm, preferably in a range from 5 to 70 μm and especially preferably in a range of 10 to 50 μm;

P3 a vibration period (as a period in which a vibrating body such as a sonotrode or an inductor acts on the sheet-like composite with a vibrating contact) in a range from 50 to 1000 ms, preferably in a range from 100 to 600 ms and especially preferably in a range of 150 to 300 ms.

For the appropriate selection of the radiation or vibration conditions, it is advantageous to take into account the intrinsic resonances of the plastics and to select frequencies close to them.

Heating over a contact with a solid material, for example, can be carried out using a hot plate or heating mould which stands in direct contact with the sheet-like composite and transfers heat to the sheet-like composite. Hot air can be directed through appropriate blower outlet openings or nozzles or a combination thereof onto the sheet-like composite. Contact heating and hot gas are frequently employed simultaneously. Thus, for example, a holding device for a tube formed by the sheet-like composite with appropriate openings for the flow-through of hot gas can heat the sheet-like composite through contact with the wall of the holding device and the hot gas. In addition, the heating of the tube can also be achieved by fixing the tube with a tube holder and streaming gas onto the areas of the tube to be heated through one or two and more hot gas nozzles provided in the jacket shell holder.

Adhesion-promoting layer

All plastics suitable to create a firm bond to the surface of the respective other layer through functionalisation by means of appropriate functional groups through the creation of ionic bonds or covalent bonds or both types of bonds can be considered as adhesion agents. Preferably they are functionalised polyolefins which have been obtained by the co-polymerisation of at least one unsaturated hydrocarbon as main monomer, preferably at least one alpha-olefin, more preferably at least one of alpha-olefin selected from the group consisting of ethylene, propylene, 1-butylene, 1-pentene, 1-hexene, 1-octene, 1-nonene, and a combination of at least two thereof, particularly preferred ethylene or propylene and especially preferred ethylene, with at least one co-monomer bearing a hetero-atom, preferably at least one ethylenically unsaturated monomer bearing at least one functional group selected the group consisting of a carboxylic acid group, a salt of a carboxylic acid group, a carboxylic anhydride group and a combination of at least two thereof, particularly preferred a co-monomer selected from the group consisting of acrylic acids such as acrylic acid, methacrylic acid, crotonic acid, acrylates, acrylate derivatives or double-bonded carboxylic anhydrides, such as maleic anhydride, and a combination of at least two thereof. Among these, polyethylene-maleic anhydride-grafted polymers (EMAH), ethylene-acrylic acid copolymers (EAA) or ethylene-methacrylic acid copolymers (EMAA) are preferred, which, by way of an example, are sold under the trade names Bynel® and Nucrel®0609HSA by DuPont or Escor®6000ExCo by ExxonMobile Chemicals. The layer thickness of the adhesion-promoting layer $LT_{apl}$ in the sheet-like composite is preferably higher than the layer thickness of the inner polymer layer $LT_{ipl}$. It is particularly preferred that the layer thickness of the adhesion-promoting layer $LT_{apl}$ is higher than the layer thickness of the polymer inner layer $LT_{ipl}$ by a factor in a range from 1.1 to 5, or preferably in a range from 1.2 to 4, or preferably in a range of from 1.3 to 3.5. The total thickness of the adhesion-promoting layer and the inner polymer layer is preferably in the range from 10 to 120 μm, preferably in a range from 15 to 80 μm and especially preferably in a range from 18 to 60 μm. The preferred layer thicknesses of the individual two layers result from the aforementioned factors.

According to the invention, C=O group absorption maximums of the adhesion-promoting layer's outer surface to the adhesion-promoting layer's inner surface are decreasing. The value of the C=O group absorption maximums is preferably described by a monotonically decreasing function of the distance to the adhesion-promoting layer's outer surface. A preferred monotonically decreasing function is a step function. Another preferred monotonically decreasing function is a strictly monotonically decreasing function. The slope of the strictly monotonically decreasing function is preferably less negative with an increasing distance from the adhesion-promoting layer's outer surface.

It is preferable that a first peak of the adhesion-promoting layer, or one of the polymers included in it or of the adhesion-promoting material is in the wave number range from 1750 to 1650 $cm^{-1}$. This is generated by the oscillation of the C=O groups. It is further preferred that the polymer described above shows a further peak corresponding to the $CH_2$ oscillation in the wave number range from 1400 to 1500 $cm^{-1}$. The C=O group absorption maximum of each spectrum is determined as the ratio of the peak height in the wave number range from 1750 to 1650 $cm^{-1}$ to the peak height in the wave number range from 1400 to 1500 $cm^{-1}$. The C=O oscillation is thus standardised to the $CH_2$ oscillation from the same spectrum. This standardised C=O oscillation is the dimensionless C=O group absorption maximum to be determined. Furthermore, from the ratio of the peak height of the oscillation of C=O groups to the peak height of the oscillations of the $CH_2$ groups one can derive the ratio of the amount of repeating units in the polymer that are based on the co-monomer(s) to the amount of repeating units in the polymer that are based on the main monomer(s). The smaller the C=O group absorption peak, the lower the proportion of the repeating units based on the co-monomer in comparison to the repeating units based on the main monomer in the respective polymer or the adhesion-promoting layer. The same as for the polymer, this also applies to the adhesion-promoting layer. In particular, the smaller the C=O group maximum absorption, the lower the proportion of the repeating units based on the co-monomer when compared to the repeating units based on the main monomer in the adhesion-promoting layer. Preferably, the following applies: the proportion of the repeating units based on the co-monomer in comparison to the repeating units based on the main monomer in the adhesion-promoting layer decreases along a straight line from the outer surface of the adhesion-promoting layer to the inner surface of the adhesion-promoting layer. With this decrease, it is preferable that the inner surface of the adhesion-promoting layer features a repeating unit based on a co-monomer. With this decrease, it is also preferred that this decrease is affected in two, three, four, five, six or more steps. The statements in this text concerning the C=O group absorption maximum concerning its decrease in the adhesion-promoting layer apply accordingly in this case.

Preferably, the adhesion-promoting layer is obtained by co-extrusion. A preferred co-extrusion is an extrusion with the simultaneous use of at least 2, preferably at least 3, preferably at least 4 extruders. Preferably, the adhesion-promoting layer is obtained by applying at least two different materials promoting adhesion, also called adhesion-promoting materials, in one application step onto the surface of the barrier layer in a manner such that they blend at least partially, jointly forming the adhesion-promoting layer. Thereby at least two adhesion-promoting materials are preferably applied simultaneously to the respective surface. Further preferred are all adhesion-promoting materials from which the adhesion-promoting layer is formed during the formation of the adhesion-promoting layer in a molten state. Preferably, the adhesion-promoting materials can be placed in contact together prior to application to the surface, preferably under formation of a laminar structure of the adhesion-promoting materials. By combining the various materials in a molten state at least a partial blending of the various materials is achieved. This distinguishes the thus applied adhesion-promoting layer of layers which are applied one after the other, wherein one of the layers has already been hardened. Preferably, a gradient of C=O group absorption maximums is created on application of the at least two adhesion-promoting layer materials in the adhesion-promoting layer along its layer thickness. By applying at least two adhesion-promoting layer materials in the molten state, the two materials blend with each other so that they do not form two individual layers, but can be considered as a single joint layer. For forming the adhesion-promoting layer, preferably at least two, preferably at least 3, more preferably at least 4, most preferably at least 5 polymer melts are led to a feed block, put in contact with each other by forming a laminar structure of the polymer melts and then applied in the molten and contacted state onto the barrier layer. The at least two adhesion-promoting layer materials are preferably the above described functionalized polyolefins that have been obtained by co-polymerization of at least one unsaturated hydrocarbon as a main monomer and at least one co-monomer bearing a hetero-atom, wherein the individual adhesion-promoting layer materials differ from each other with respect to the content of the co-monomer relative to the main monomer. To ensure that the C=O group absorption maximum of the adhesion-promoting layer decreases from the adhesion-promoting layer's outer surface towards the adhesion-promoting layer's inner surface, in the co-extrusion process the at least two adhesion-promoting layer materials are applied in such a way that the order of application of these materials is depended from the content of the co-monomer in the functionalized polyolefin of the respective adhesion-promoting layer material. In doing so the functionalized polyolefin having the highest co-monomer content is preferably directly applied onto the barrier layer, followed by the further functionalized polyolefine or the further functionalized polyolefins with increasingly reduced co-monomer content, the co-monomer content in each case defined relative to the content of the main monomer in the functionalized polyolefin of the respective layer area.

Additional polymer layers

Between the aforementioned layers of the composite of the invention, additional adhesion-promoting layers but also other plastic or polymer layers may be present, unless otherwise indicated, e. g by specifying that certain layers or surfaces are adjacent to each other. The materials for the additional plastic or polymer layers are preferably the same as specified for the inner polymer layer or the outer polymer layer. Preferably, an additional adhesion-promoting layer is arranged between the carrying layer and the barrier layer. The additional adhesion-promoting layer can be structured in the same manner as the adhesion-promoting layer or be made of other materials. The thickness of the additional adhesion-promoting layer is preferably 5 to 15 times, preferably 7 to 13 times, more preferably 9 to 11 times, less than the thickness of the adhesion-promoting layer. The material is also preferably selected from the group of materials as indicated for the adhesion-promoting layer. Preferably, the material of the additional adhesion-promoting layer features constant C=O group absorption maximums over the thickness of the layer. However, the additional adhesion-promoting layer may also feature different C=O group absorption maximums at the carrying layer and the barrier layer in the form of the previously described adhesion-promoting layer. Preferably, the additional adhesion-promoting layer features a higher C=O group absorption maximum on the side of the barrier layer than on the side of the carrying layer. Additionally, a further protective layer may be applied to the side of the outer polymer layer facing away from carrying layer. Hereby a polycarbonate layer is preferred as a protective layer.

C=O group absorption maximums

The ranges of values specified in this document for the first C=O group absorption maximum, the second C=O group absorption maximum and the third C=O group absorption maximum are selected in such a manner that they contribute to solve at least one of the objectives of the invention. Furthermore, the value ranges are selected in such a manner that the first C=O group absorption maximum, the second C=O group absorption maximum and the third C=O group absorption maximum can always be selected in such a manner that the first C=O group absorption maximum is higher than the second C=O group absorption maximum and the third C=O group absorption maximum is lower than the first C=O group absorption maximum and the third C=O group absorption maximum is higher than the second C=O group absorption maximum. Thus, at least one of the first to the third C=O group absorption maximums can be chosen freely within the predetermined range. The other two must be chosen from their respective ranges of values so that they satisfy the aforementioned conditions. This applies to all preference levels of the value ranges. Different preference levels should not be mixed. The values of the C=O group absorption maximums should therefore always be selected from the same preferred ranges of values.

Adhesion

According to the invention, it is preferred that the adhesion between the carrying layer, the outer polymer layer, the inner polymer layer or the barrier layer, preferably at least two of them, to the respective next layer amounts to at least 0.5 N/15 mm, preferably at least 0.7 N/15 mm and particularly preferably at least 0.8 N/15 mm. In one embodiment of the invention, it is preferred that the adhesion between the outer polymer layer and the carrying layer amounts to at least 0.3 N/ 15mm, preferably at least 0.5 N/15 mm and particularly preferably at least 0.7 N/15 mm. It is further preferred that the adhesion between the barrier layer and the inner polymer layer amounts to at least 0.8 N/15 mm, preferably at least 1.0 N/15 mm and particularly preferably at least 1.4 N/15 mm. It is preferred that the adhesion between the barrier layer and the adhesion-promoting layer amounts to at least 1.8 N/15 mm, preferably at least 2.2 N/15 mm and particularly preferably at least 2.8 N/15 mm. In a particular embodiment of the sheet-like composite, the adhesion between the individual layers is developed so strongly that the adhesion test causes a tear in the carrying layer in the case of cardboard as a carrying layer, a so-called cardboard fibre tear. In one embodiment of the process 1 for manufacturing a sheet-like composite according to the invention, it is preferable that for further improvement of the adhesion of two adjacent layers to each other, they are subjected to, for example, to surface treatment during coating. A flame treatment, a plasma treatment, a corona treatment or a treatment with ozone, inter alia, are known to the person skilled in the art as suitable process for surface treatment. However, other processes that cause the formation of functional groups on the surface of the treated layer are also conceivable. In a particular embodiment, at least one of these processes is employed in the lamination of metal layers, in particular of metal foils.

Polyolefin

A preferred polyolefin is a polyethylene or a polypropylene, or both. A preferred polyethylene is one selected from the group consisting of an LDPE, LLDPE one, and a HDPE, or a combination of at least two of them. Another preferred polyolefin is an m-polyolefin. Suitable polyethylenes have a melt flow rate (MFR - Melt Flow Rate) in a range from 1 to 25 g/10 min, preferably in a range from 2 to 20 g/10 min and particularly preferably in a range from 2.5 min to 15 g/10 min and a density in a range from 0.910 g/cm$^3$ to 0.935 g/cm$^3$, preferably in a range from 0.912 g/cm$^3$ to 0.932 g/cm$^3$, and more preferably in a range from 0.915 g/cm$^3$ to 0.930 g/cm$^3$.

m-polymer

An m-polymer is a polymer which has been produced using a metallocene catalyst. A metallocene is an organometallic compound in which a central metal atom is arranged between two organic ligands such as cyclopentadienyl ligands. A preferred m-polymer is an m-polyolefin, preferably an m-polyethylene or an m-polypropylen or both. A preferred m-polyethylene is one selected from the group consisting of an mLDPE, an mLLDPE and an mHDPE, or a combination of at least two of them.

Extrusion

In extrusion, the polymers are usually heated to temperatures from 210 to 330°C, measured on the molten polymer film below the exit of the extruder nozzle. The extrusion can be carried out by commercially available extrusion tools known to the professional specialist such as extruders, extruder screws, feed block, etc. At the end of the extruder there is preferably an opening through which the polymer melt is pressed. The opening may have any shape which allows for extrusion of the polymer melt to the composite precursor. Thus, the opening may be, for example square, oval or round. The opening preferably has the shape of a slit of a funnel. In a preferred embodiment of the process, application is carried out through a slit. The slit preferably has a length in a range from 0.1 to 100 m, preferably in a range from 0.5 to 50 m, particularly preferably in a range from 1 to 10 m. Furthermore, the slit preferably features a width in a range from 0.1 to 20 mm, preferably in a range from 0.3 to 10 mm, particularly preferably in a range from 0.5 to 5 mm. During the application of the polymer melt, it is preferred that the slit and the composite precursor move relative to each other. Thus, a process is preferred wherein the composite precursor moves relative to the slit.

According to another preferred embodiment of the process for manufacturing a sheet-like composite according to the invention, it is preferred that the polymer melt is stretched during application, wherein this stretching is done preferably over melt routes, most preferably over monoaxial melt routes. For this purpose, the layer is applied by means of a melt extruder in a molten state onto the composite precursor and the layer is applied, still in a molten state, and then preferably stretched in a monoaxial direction to obtain an orientation of the polymer in this direction. Subsequently, the applied layer is allowed to cool for the purpose of heat setting. In this context it is particularly preferred that the stretching is carried out by at least the following application steps:

b1. Discharge of the molten polymer as a melt film through at least one extruder nozzle slit at a discharge speed of $V_{dis}$.;

b2. Application of the melt film to the composite precursor moving relative to the at least one extruder nozzle slit at a movement speed of $V_{c.p.}$;

wherein $V_{dis}$ is < $V_{c.p}$. In particular, $V_{c.p}$. is preferably greater than $V_{dis}$. by a factor in a range of from 5 to 200, preferably in a range of from 7 to 150, more preferably in a range of from 10 to 50 and most preferably in a range of from 15 to 35. $V_{c.p}$. is preferably greater than at least 100 m/min, more preferably at least 200 m/min and most preferably at least 350 m/min, but not normally above 1300 m/min. After the melt layer has been applied to the composite precursor by means of the stretch process described above, the melt layer is allowed to cool for the purpose of heat setting, wherein this cooling is allowed to take place preferably through chilling through contact with a surface which is kept at a temperature in a range of from 5 to 50°C, particularly preferably in a range of from 10 to 30°C. As described above, after heat setting it can be particularly advantageous if the sheet-like composite is thermally treated at least in the area of the at least one hole in order to cancel the orientation of the polymers.

According to a further preferred embodiment, the discharged surface is cooled to a temperature below the lowest melting temperature of the polymers provided for in this surface or its edges and then at least the edges of the surface are separated from this surface. Cooling can take place in any way that is familiar to and appears to be suitable to the person skilled in the art for this purpose. The heat setting described above is also preferred here. Then, at least the edges are separated from the surface. Separation can take place in any way that is familiar to and appears to be suitable to the person skilled in the art for this purpose. Separation preferably takes place through knives, laser beam or water jet or a combination of two thereof, wherein the use of knives, in particular knives with a scissor-like cutting action is particularly preferred.

Folding of the sheet-like composite

In connection with the process according to the invention 2 for the production of a container blank, the folding preferably take place within a temperature range of from 10 to 50°C, preferably in a range of from 15 to 45°C and particularly preferably in a range of from 20 to 40°C. This can be achieved if the sheet-like composite has a temperature within the aforementioned ranges. A folding tool, preferably together with the sheet-like composite, preferably has a temperature within the aforementioned range. For this purpose, the folding tool does not have heating. Rather, the folding tool or the sheet-like composite, or both, can be cooled. Further, the folding preferably takes place as cold folding at a maximum temperature of 50°C and that joining in step (c) preferably takes place as heat-sealing at a temperature of more than 50°C, preferably more than 80°C and particularly preferably more than 120°C. The conditions set out above and, in particular the temperatures preferably also apply in the immediate vicinity of the folding, for example in the housing of the folding tool. In a further embodiment of the process according to the invention 2, cold folding, or cold folding in combination with heat-sealing, is preferably used at angles formed during folding $\mu$ of less than 100°, preferably less than 90°, particularly preferably less than 70° and most preferably less than 50°. The angle $\mu$ is formed by two adjacent fold surfaces.

In the process according to the invention, "folding" is understood as meaning an operation in which preferably an elongated crease forming an angle is generated in the folded sheet-like composite by means of a folding edge of a folding tool. For this, two adjacent surfaces of a sheet-like composite are often bent ever more towards one another. The folding gives rise to at least two adjacent fold surfaces, which can then by joined, at least in part regions, to form a container region. According to the invention, the joining can be effected by any measure which appears to be suitable to the person skilled in the art and which makes possible a join which is as gas- and water-tight as possible. The joining can be effected by sealing or gluing or a combination of the two measures. In the case of sealing, the join is created by means of a liquid and solidification thereof. In the case of gluing, chemical bonds which create the join form between the interfaces or surfaces of the two objects to be joined. In the case of sealing or gluing, it is often advantageous for the surfaces to be sealed or glued to be pressed together with one another.

The sealing temperature is preferably selected so that the one or more thermoplastic polymers participating in the sealing, preferably the polymers of the polymer layers are present as melts. Therefore, the sealing temperatures are at least 1 K, preferably at least 5 K and especially preferably at least 10 K above the melting temperature of the respective polymer. In addition, the sealing temperature should not be chosen too high so as not to unnecessarily burden the polymers too strongly, so that they do not lose their intrinsic material properties.

In a further embodiment of the process according to the invention 2, it is preferable for the fold surfaces to form an angle $\mu$ of less than 90°, preferably of less than 45° and particularly preferably of less than 20°. The fold surfaces are often folded to the extent that these come to lie on one another at the end of the folding. This is advantageous in particular if the fold surfaces lying on one another are subsequently joined to one another in order to form the container base and the container top, which is configured gable-like or also flat. Regarding the gable configuration, reference may be made by way of example to WO 90/09926 A2.

Food products

All foodstuffs known to the person skilled in the art for human consumption and also animal feed are possible as the foodstuff. Preferred foodstuffs are liquids above 5°C, for example dairy products, soups, sauces, and non-carbonated drinks. The container or the container blank can be filled in various ways. On the one hand, prior to filling, the foodstuff and the container or the container blank can be separately sterilised as far as possible through suitable measures such as treating the container or the container blank with $H_2O_2$, UV radiation or other suitable high-energy radiation, plasma treatment or a combination of at least two thereof, and by heating the foodstuff and then filling it into the container or the container blank. This type of filling is often referred to as "aseptic filling" and is preferred according to the invention. In addition to or instead of aseptic filling, heating the container or the container blank after it has been filled with a foodstuff in order to reduce the germ count is widespread. This is carried out preferably by pasteurisation or autoclaving. With this procedure, less sterile foodstuffs and containers or container blanks can be used.

Container

The container according to the invention can take a variety of different forms. An essentially cuboid structure is, however, preferred. The container can be formed completely out of the sheet-like composite or have a two-part or multi-part structure. In the case of a multi-part structure, it is conceivable that, in addition to the sheet-like composite, other materials can also be used, such as plastic, for example, which can be used in particular in the container base and the container top. However, it is preferable for the container to be formed to the extent of at least 50%, preferably to the extent of at least 70% and moreover preferably to the extent of at least 90% of their surface from the sheet-like composite. The container can also have a device for emptying the contents. This can be formed from plastic, for example, and be attached to the outside of the container. It is also conceivable for this device to be integrated into the container by direct injection moulding. According to a preferred embodiment, the container according to the invention has at least one, preferably from 4 to 22 or more edges, particularly preferably from 7 to 12 edges. In the context of the present invention, "edges" constitute sections that are formed by folding a surface. By way of an example, we can define the elongated contact regions of two wall surfaces of the container as "edges". In the container, the container walls preferably represent the surfaces of the container framed by edges. Preferably, the interior of a container, according to the invention, contains a food product.

Container precursor

A preferred container precursor has the shape of a shell or a tube or both. Another preferred container precursor comprises an open top section or an open bottom section, or both. In a preferred container precursor, the inner polymer layer is turned inwards.

Measurement Methods

The following measuring methods were used within the invention. Unless indicated otherwise, measurements were taken at an ambient temperature of 25°C, an ambient air pressure of 100 kPa (0.986 atm) and a relative humidity of 50%.

MFR value

The MFR value is measured in accordance with the ISO 1133 standard (unless otherwise mentioned, at 190°C and 2.16 kg).

Density

Density is measured in accordance with ISO 1183-1.

Melting temperature

The melting temperature is determined by the DSC method ISO 11357-1, -5. Instrument calibration is carried out in accordance with the manufacturer's instructions using the following measurements:

- indium temperature - onset temperature,
- indium melting temperature,
- zinc temperature - onset temperature.

Viscosity number of PA

The viscosity number of PA is measured according to the standard ISO 307 in 95% sulfuric acid.

Oxygen permeation rate

The oxygen permeation rate is determined in accordance with the standard ISO 14663-2 Annex C at 20°C and 65% relative humidity.

Moisture content of cardboard

The moisture content of cardboard is measured according to the standard ISO 287:2009.

Adhesion

To determine the adhesion of two adjacent layers, they are attached to a 90° peel test device, such as Instron's "German rotating wheel fixture", on a rotatable roller which rotates during the measurement at 40 mm/min. The samples were previously cut into strips 15 mm wide. On one side of the sample, the layers are separated from each other and the detached end is clamped into a vertically upward pulling device. A measuring device for determining the tensile force is applied to the pulling device. Upon rotation of the roller, the force required to separate the layers from each other is measured. This force corresponds to the adhesion of the layers to each other and is expressed in N/15 mm. The separation of the individual layers may be achieved mechanically, for example, or by a specific pre-treatment, for example, by soaking the sample for 3 min in 30% acetic acid heated to 60°C.

C=O group absorption maximum

For determining a C=O group absorption maximum, a measurement is performed by means of ATR-infrared spectroscopy.

a) Preparation of the adhesion-promoting layer

For this purpose, the sheet-like composite, which contains the adhesion-promoting layer is prepared first. A section is created through the layer sequence of the composite, which is done perpendicular to the layer sequence direction. This is done by means of a cut generated by a microtome.

b) Preparation of the plurality of polymer particles

For the measurement of a polymer particle, a smooth surface is required, which is produced by a section through the polymer particle using a knife. The obtained surface should hereby completely cover the measurement area of the spectroscope. The sample is placed with the cut surface on the measuring surface and firmly pressed onto it. To determine the C=O group maximum absorption of a variety of polymer particles, 10 polymer particles from the plurality of the polymer particles are randomly selected and measured as described herein. From the 10 measurement results, the average is calculated, representing the result of the plurality.

c) ATR-infrared spectroscopy

The cutting plane is analysed by means of an FT-IR microscope (Thermo Scientific Nicolet ™ iN ™ 10 MX Infrared Imaging Microscope from Thermo Fisher Scientific Inc.). Herein, in the case of a measurement on an adhesion-promoting layer, the position of the outer surface of the adhesion-promoting layer is determined through the identification of the barrier layer. An ATR spectrum of the sample to be measured at the previously identified position in a wave number range of 2000 to 1000 $cm^{-1}$ with a resolution of 4 $cm^{-1}$ is recorded. Figure 7, described below in more detail, exemplifies a number of such spectrums for different measurements. The measured spectrum includes a first maximum of the measured absorption/absorbance in the wave number range from 1650 to 1750 $cm^{-1}$. This first maximum is caused by the oscillation of C=O groups. In addition, the spectrum includes a further maximum in the wavelength range of 1400 to 1500 $cm^{-1}$. This additional maximum corresponds to the $CH_2$ oscillation. The C=O group absorption maximum is determined as the ratio of the first maximum to the additional maximum. The C=O-vibration is thus normalised on the $CH_2$ oscillation from the same spectrum. This standardised C=O oscillation is the dimensionless C=O group absorption maximum to be determined.

$$\text{C=O group absorption maximum} = I_{max}\,(1650 - 1750\ cm^{-1}) \,/\, I_{max}\,(1400 - 1500\ cm^{-1})$$

In an adhesion-promoting layer, according to the invention, for different measuring positions at different distances from the outer surface of the adhesion-promoting layer, different heights of first maximums result, whereby the additional maximums ($CH_2$ oscillation) are approximately constant. The term C=O group absorption maximums thus refers to normalised C=O group maximums in different spectrums, which were measured at different measurement positions or different samples (e.g. different granulates).

The invention is illustrated in more detail below in examples and drawings, whereby the examples and drawings do not imply a limitation of the invention. Shown are:

| | |
|---|---|
| Figure 1 | a schematic cross-section through a layer sequence of a sheet-like composite according to the invention; |
| Figure 2 | a schematic cross-section through a layer sequence of a further sheet-like composite according to the invention; |
| Figure 3 | a schematic cross-section through a layer sequence of a further sheet-like composite according to the invention; |
| Figure 4 | Measurement results of C=O group absorption maximums of an adhesion-promoting layer according to |

the invention as a function of the distance between the measuring position to the outer surface of the adhesion-promoting layer;

Figure 5a) a schematic step function of the C=O group absorption maxima of an adhesion-promoting layer according to the invention from a position on a straight line from the outer surface of the adhesion-promoting layer to the inner surface of the adhesion-promoting layer;

Figure 5b) a schematic cross-section through a layer sequence of a sheet-like composite according to the invention with a straight line along which the C=O group absorption maxima depicted in Figure 5a) can be measured;

Figure 6 a schematic step function of the C=O group absorption maxima of an additional adhesion-promoting layer according to the invention at a distance from the outer surface of the adhesion-promoting layer;

Figure 7 ATR-IR spectrums of various polymers;

Figure 8 a schematic representation of a container precursor according to the invention;

Figure 9 a schematic representation of a container according to the invention;

Figure 10 a flow chart of a process for manufacturing a sheet-like composite according to the invention;

Figure 11 a flow chart of a process for manufacturing a container precursor according to the invention;

Figure 12 a flow chart of a process for manufacturing a container according to the invention; and

Figure 13 a flow chart of a further method for manufacturing a container according to the invention.

Figure 1 shows a schematic cross-section through a layer sequence of a sheet-like composite 100 according to the invention The sheet-like composite 100 comprises an outer polymer layer 101 as layers of a layer sequence, followed by a carrying layer 102, followed by a polyethylene layer 103, followed by a barrier layer 104, followed by an adhesion-promoting layer 105, followed by an inner polymer layer 106 The adhesion-promoting layer 105 comprises an outer surface of the adhesion-promoting layer 107 and an inner surface of the adhesion-promoting layer 108. The outer surface 107 of the adhesion-promoting layer is adjacent to the barrier layer 104 and is characterised by a first C=O group absorption maximum. The inner surface 108 of the adhesion-promoting layer is adjacent to the inner polymer layer 106 and is characterised by a second C=O group absorption maximum. Furthermore, the inner surface 108 of the adhesion-promoting layer has a first distance 109 to the outer surface 107 of the adhesion-promoting layer. The first distance 109 amounts to 100 μm. The first C=O group absorption maximum amounts to 1.7. The second C=O group absorption maximum amounts to 0.22. The outer polymer layer 101 is composed to 100 wt.-% respective to the outer polymer layer 101 of an LDPE and features a surface weight of 20 $g/m^2$. The carrying layer 102 has a surface weight of 210 $g/m^2$ and consists of the Liquid Packaging Board Stora Enso Natura T duplex from the Stora Enso AG company. The carrying layer 102 is characterised by a double coating, a Scott Bond value of 200 $J/m^2$ and a residual moisture content of 7.5%. The polyethylene layer 103 is characterised by a surface weight of 22 $g/m^2$ and consists of an LDPE. Another layer may be located between the polyethylene layer 103 and the barrier layer 104 (not shown), which consists to 100% weight of Novex® M21N430 from Ineos Köln GmbH and features a surface weight of 3 $g/m^2$. The barrier layer 104 has a layer thickness of 6 μm and consists of aluminium EN AW 8079 from Hydro Aluminium Deutschland GmbH. The adhesion-promoting layer 105 has a surface weight of 90$g/m^2$, a layer thickness of 100 μm, and consists of 50 wt.-% each respective to the total weight of the adhesion-promoting layer 105 of Escor™ 5100 from the Exxon Mobil Corporation and Novex® M21N430 from Ineos Köln GmbH. The adhesion-promoting layer 105 was produced via co-extrusion. For this purpose, a polymer melt of Escor™ 5100 and a polymer melt of Novex® M21N430 were created initially. The two polymer melts were brought together and put in contact in a feed block. The contacted polymer melts were extruded together onto the barrier layer 104. Thus, when manufacturing the adhesion-promoting layer 105, it came to a partial mixing of the melting of Escor™ 5100 and Novex® M21N430 in a transition section. Outside of the transition section, the adhesion-promoting layer 105 in a part facing the barrier layer 104 consists mainly of Escor™ 5100 and in a part facing the inner polymer layer 106 part mainly of Novex® M21N430. The inner polymer layer 106 has a surface weight of 22 $g/m^2$, a layer thickness of 10 μm and consists of a PE blend. The PE blend comprises about 80 wt.-% of an mLDPE and 20 wt.-% of an LDPE, respective to the PE blend.

Figure 2 shows a schematic cross-section through a layer sequence of a further sheet-like composite 100 according to the invention. The sheet-like composite 100 of Figure 2 is the sheet-like composite 100 of Figure 1, but with a different adhesion-promoting layer 105. The adhesion-promoting layer 105 comprises an outer surface of the adhesion-promoting layer 107 and an inner surface of the adhesion-promoting layer 108. The outer surface 107 of the adhesion-promoting layer is adjacent to the barrier layer 104 and is characterised by a first C=O group absorption maximum. The inner surface 108 of the adhesion-promoting layer is adjacent to the inner polymer layer 106 and is characterised by a second C=O group absorption maximum. Furthermore, the inner surface 108 of the adhesion-promoting layer has a first distance 109 to the outer surface 107 of the adhesion-promoting layer. The first distance 109 amounts to 100μm. The first C=O group absorption maximum amounts to 1.7. The second C=O group absorption maximum amounts to 0.22. The adhesion-promoting layer 105 is further characterised in that it features a third level C=O group absorption maximum at first layer level 201 with a second distance 202 of 50 μm from the outer surface 107 of the adhesion-promoting layer. The third C=O group absorption maximum amounts to 0.9. The adhesion-promoting layer 105 has a surface weight of 90 g/m$^2$ and consists of 33.3 wt.-% each respective to the total weight of the adhesion-promoting layer 105 of Escor™ 5100 from Exxon Mobil Corporation; Escor ™ 6000 from Exxon Mobil Corporation; and Novex® M21N430 from Ineos Köln GmbH. The adhesion-promoting layer 105 was produced by co-extrusion. For this purpose, a polymer melt of Escor™ 5100 and a polymer melt of Escor ™ 6000 and a polymer melt of Novex® M21N430 were created initially. The three polymer melts were brought together and put in contact in a feed block. The contacted polymer melts were extruded together onto the barrier layer 104. Thus, when manufacturing the adhesion-promoting layer 105, it came to a partial mixing of the melting of Escor™ 5100 and Escor ™ 6000 in a transition area; and the melting of Escor ™ 6000 and Novex® M21N430 in another transition area. Outside the transition areas, the adhesion-promoting layer 105 consists mainly of a part facing the barrier layer 104 of Escor™ 5100; in a central part mainly of Escor ™ 6000; and in a part facing the inner polymer layer 106 mainly of Novex M21N430.

Figure 3 shows a schematic cross-section through a layer sequence of a further sheet-like composite 100 according to the invention. The sheet-like composite 100 of Figure 3 is the sheet-like composite 100 of Figure 1, but with a different adhesion-promoting layer 105. The adhesion-promoting layer 105 comprises an outer surface of the adhesion-promoting layer 107 and an inner surface of the adhesion-promoting layer 108. The outer surface 107 of the adhesion-promoting layer is adjacent to the barrier layer 104 and is characterised by a first C=O group absorption maximum. The inner surface 108 of the adhesion-promoting layer is adjacent to the inner polymer layer 106 and is characterised by a second C=O group absorption maximum. Furthermore, the inner surface 108 of the adhesion-promoting layer has a first distance 109 to the outer surface 107 of the adhesion-promoting layer. The first distance 109 amounts to 100 μm. The first C=O group absorption maximum amounts to 1.9. The second C=O group absorption maximum amounts to 0.2. The adhesion-promoting layer 105 is further characterised in that it features a third level C=O group absorption maximum at first layer level 201 with a second distance 202 of 25 μm from the outer surface 107 of the adhesion-promoting layer. The third C=O group absorption maximum amounts to 0.9. The adhesion-promoting layer 105 is further characterised in that it features a fourth C=O group absorption maximum in a further layer level 301 with a third distance 302 of 75 μm from the outer surface 107 of the adhesion-promoting layer. The fourth C=O group absorption maximum amounts to 0.5. The adhesion-promoting layer 105 has a surface weight of 100 g/m$^2$ and consists of 25 wt.-% each respective to the total weight of the adhesion-promoting layer 105 of Escor™ 5100 from Exxon Mobil Corporation; of Escor ™ 6000 from Exxon Mobile Corporation; of Novex® M23N430 from Ineos Köln GmbH; and of Novex® M21N430 from Ineos Köln GmbH. The adhesion-promoting layer 105 was produced by co-extrusion. For this purpose, a polymer melt of each Escor™ 5100, Escor ™ 6000, Novex® M23N430 and Novex® M21N430 was first produced. The four polymer melts were brought together and put in contact in a feed block. The contacted polymer melts were extruded together onto the barrier layer 104. Thus, when manufacturing the adhesion-promoting layer 105, it came to a partial mixing of the melting of Escor™ 5100 and Escor ™ 6000 in a transition area; and the melting of Escor ™ 6000 and Novex® M23N430 in a second transition area; and the melting of Novex® M23N430 and Novex® M21N430 in a third transition area. Outside of the transition areas, the adhesion-promoting layer 105 consists mainly of a part facing the barrier layer 104 of Escor™ 5100; in a part following the inner part 108 of the adhesion-promoting layer, mainly of Novex® M23N430; and in a part facing the inner polymer layer 106, mainly of Novex® M21N430.

Figure 4 shows measurement results of C=O group absorption maximums of an adhesion-promoting layer 105, according to the invention, derived from a distance of the measuring position to the outer surface 107 of the adhesion-promoting layer. The measurement position at distance 0 is located on the outer surface 107 of the adhesion-promoting layer. The measurement position at a distance of 100μm is on an inner surface 108 of the adhesion-promoting surface. Figure 4 shows that the C=O group absorption maximum of the outer surface 107 of the adhesion-promoting layer to the inner surface 108 of the adhesion-promoting layer becomes lower within the adhesion-promoting layer 105.

Figure 5a) shows a schematic step function of C=O group absorption maximums of an adhesion-promoting layer 105, according to the invention, from a position on a straight line 501 from the outer surface 107 of the adhesion-promoting layer to the inner surface 108 of the adhesion-promoting layer. The position 0 corresponds to the outer side 107 of the adhesion-promoting layer. The dotted line in Figure 5a) marks the location corresponding to the inner surface 108 of the adhesion-promoting layer. The step function comprises 3 steps 500 and is monotonically decreasing, but not strictly monotonically decreasing. On the first step 500 (first from the left) is the first C=O group absorption maximum. Below the third step 500 (value at the position of the inner surface of the adhesion-promoting layer) is the second C=O group absorption maximum. On the second step 500 (second from the left) is the third C=O group absorption maximum. On the third step 500 (third from the left) is the fourth C=O group absorption maximum. The values shown in Figure 5a) belong to the adhesion-promoting layer 105 of the sheet-like composite 100 in Figure 5b).

Figure 5b) shows a schematic cross-section through a layer sequence of a sheet-like composite 100 according to the invention with a line 501 along which the C=O group absorption maximums shown in Figure 5a) can be measured. The outer polymer layer 101, the carrying layer 102, the polyethylene layer 103, the barrier layer 104 and the inner polymer layer 106 are similar to those described in Figure 1. The adhesion-promoting layer 105 is composed of 4 different ethylene-acrylic acid co-polymers (EAA). To produce the adhesion-promoting layer 105, 4 different EAA co-polymer melts were co-extruded. In this case, the acrylic acid content decreases from a first co-polymer melt over a second and third to a fourth co-polymer melt.

Figure 6 shows a schematic step function of the C=O group absorption maximums of a further adhesion-promoting layer 105 according to the invention of a distance to the outer surface 107 of the adhesion-promoting layer 107. The distance 0 corresponds to the outer surface 107 of the adhesion-promoting layer. The dotted line in Figure 6 marks the distance corresponding to the inner surface 108 of the adhesion-promoting layer. The step function comprises 4 steps 500 and is monotonically decreasing, but not strictly monotonically decreasing. The adhesion-promoting layer 105 is composed of 5 different ethylene-methacrylic acid co-polymers (EMAA). To produce the adhesion-promoting layer 105, 5 different EAA copolymer melts were coextruded. In this case, the methacrylic acid content decreases from a first co-polymer melt over a second, third, and fourth to a fifth co-polymer melt.

Figure 7 shows ATR-IR spectrums of various polymers. For the various co-polymers (with ethylene acrylic acid (EAA) and ethylene methacrylic acid (EMAA) as co-monomers), the acrylic acid or methacrylic acid contents are shown between parentheses. The spectrums shown were measured on the pure co-polymers, not on the adhesion-promoting layer 105, according to the invention. Figure 7 is merely illustrative of the ATR-infrared spectroscopy. The measurement was performed in a wave number range from 2000 to 1000 $cm^{-1}$ with a resolution of 4 $cm^{-1}$. The peaks in the wave number range 1750-1650 $cm^{-1}$ are generated by the oscillation of C=O groups. In addition, Figure 7 includes another group of peaks in the wave number range from 1400 to 1500 $cm^{-1}$. These additional peaks correspond to the $CH_2$ oscillation. The C=O group absorption maximum of each spectrum is determined as the ratio of the peak height in the wave number range from 1750 to 1650 $cm^{-}1$ to the peak height in the wave number range from 1400 to 1500 $cm^{-1}$. The C=O oscillation is thus standardised on the same spectrum as the $CH_2$ oscillation. This standardised C=O oscillation is the dimensionless C=O group absorption maximum to be determined. As can be seen, the peak heights differ in the wavelength range from 1750 to 1650 $cm^{-1}$ between the various co-polymers, while the peak heights in the wavelength range from 1400 to 1500 $cm^{-1}$ are roughly constant.

Figure 8 shows a schematic representation of a container precursor 800 according to the invention. The container precursor 800 comprises the sheet-like composite 100 of Figure 1. Furthermore, the container precursor 800 comprises a fold 801 with an adjacent first folding surface 802 and a second folding surface 803. The first folding surface 802 and the second folding surface 803 overlap each other and are joined to each other by means of sealing in a sealing section 804. The sealing section 804 represents a longitudinal seam of the container precursor 800. The container precursor 800 in Figure 8 is shell-shaped.

Figure 9 shows a schematic representation of a container 900 according to the invention. The container 900 is closed and encloses an interior space 901, which contains cashew apple juice as the food product. The container 900 comprises the sheet-like composite as a wall, according to Figure 2.

Figure 10 shows a flow chart of process 1000 according to the invention for the production of a sheet-like composite 100. The process 1000 comprises a step a) 1001 providing a composite precursor, comprising as layers a layer sequence:

an outer polymer layer 101, a carrying layer 102 following the outer polymer layer 101, a polyethylene layer 103 following the carrying layer, a further polymer layer following the polyethylene layer and a barrier layer 104 following the further polymer layer. The outer polymer layer 101 is composed of 100 wt.-% respective to the outer polymer layer 101 of an LDPE and features a surface weight of 20 $g/m^2$. The carrying layer 102 features a surface weight of 210 $g/m^2$ and consists of the Liquid Packaging Board Stora Enso Natura T duplex from the company Stora Enso AG. The carrying layer 102 is characterised by a double coating, a Scott Bond value of 200 $J/m^2$ and a residual moisture content of 7.5%. The polyethylene layer 103 is characterised by a surface weight of 22 $g/m^2$ and consists of an LDPE. The further polymer layer consists of 100 wt.-% respective to the further polymer layer of Novex M21N430 from Ineos Köln GmbH and features a surface weight of 3 $g/m^2$. The barrier layer 104 has a layer thickness of 6 $\mu$m and consists of aluminium EN AW 8079 from Hydro Aluminium Deutschland GmbH. In a process step b) 1002 of the process 1000, the barrier layer 104 is overlaid by an adhesion-promoting layer 105 on a side facing away from the carrying layer 102. This is done by co-extrusion of 3 ethylene-acrylic acid or ethylene-methacrylic acid co-polymers of different acrylic acid or methacrylic acid content. The 3 ethylene-acrylic acid co-polymers are Escor™ 5100 from Exxon Mobil Corporation; Escor ™ 6000 from Exxon Mobile Corporation; and Novex® M21N430 from Ineos Köln GmbH. The application of the adhesion-promoting layer 105 to the barrier layer 104 is made by coextruding melts of the 3 aforementioned co-polymers. In a process step c) 1003 the adhesion-promoting layer 105 is overlaid by extrusion by an inner polymer layer 106 on a side facing away from the barrier layer 104. The inner polymer layer 106 features a surface weight of 10 $g/m^2$, a layer thickness of 10 $\mu$m, and consists of a PE blend. The PE blend comprises 70 wt.-% of an mLDPE and 30% weigh of an LDPE, each respective to the PE blend. Thus, an adhesion-promoting layer 105 is obtained, which comprises an outer surface 107 of the adhesion-promoting layer and an inner surface 108 of the adhesion-promoting layer. The outer surface 107 of the adhesion-promoting layer is adjacent to the barrier layer 104 and is characterised by a first C=O group absorption maximum. The inner surface 108 of the adhesion-promoting layer is adjacent to the inner polymer layer 106 and is characterised by a second C=O group absorption maximum. Furthermore, the inner surface 108 of the adhesion-promoting layer has a first distance 109 to the outer surface 107 of the adhesion-promoting layer. The first distance 109

amounts to 100 μm. The first C=O group absorption maximum amounts to 1.7. The second C=O group absorption maximum amounts to 0.2. The adhesion-promoting layer 105 is further characterised in that it features a third level C=O group absorption maximum at first layer level 201 with a second distance 202 of 50 μm from the outer surface 107 of the adhesion-promoting layer. The third C=O group absorption maximum amounts to 0.9. The adhesion-promoting layer 105 has a surface weight of 90 $g/m^2$.

Figure 11 shows a flow chart of a process 100 of the invention for manufacturing a container precursor 800. Process 1100 comprises a process step a) 1101: providing a sheet-like composite 100 according to Figure 1; a process step b) 1102: folding the sheet-like composite 100 to form a fold 801 with at least two adjoining folding surfaces 802 and 803; and a process step c) 1103: joining at least a partial section 804 of the at least two folding surfaces 802, 803 with the other partial section 804 by sealing. In process step c) 1103, the longitudinal seam of the container precursor 800 is formed. The folding in step b) 1102 is carried out as cold-folding and sealing in step c) is carried out by heat-sealing via ultrasound transmitted through a sonotrode.

Figure 12 shows a flow chart of a process 1200 according to the invention for producing a container 900 according to Figure 9. The method 1200 comprises a process step a) 1201: Provision of a container precursor 800. The container precursor 800 comprises the sheet-like composite 100 of Figure 2. Furthermore, the container precursor 800 comprises a fold 801 with adjoining folding surfaces 802 and 803. The two folding surfaces 802, 803 adjacent at fold 801 overlap in a sealing section 804. In the sealing section 804, there is a sealing connection between the two folding surfaces 802 and 803. The container precursor is tube-shaped. In a process step b) 1202 of the process 1200, the container precursor 800 is closed by means of a closing tool. For this purpose, the container precursor 800 is laterally compressed, fixed and a part of the tube-shaped container precursor 800 is separated in the direction of the tube. This part obtains a bottom section by means of fold forming and sealing or gluing, which is closed. This creates an open container. The open container obtains a top section by means of fold forming and sealing or gluing, which is closed to obtain the closed container 900.

Figure 13 shows a flow chart of a further process 1200 for producing a container 900, according to the invention. The process 1200 in Figure 13 is the process in Figure 12, wherein the process in Figure 13 comprises a further process step 1301 between the process steps a) 1201 and b) 1202. In the further process step 1301, a food product, a ham broth, is filled into the container precursor 800. The filling is carried out before the separation of the part of the tube-shaped container precursor 800.

List of Reference Numbers

**[0116]**

| | |
|---|---|
| 100 | sheet-like composite according to the invention |
| 101 | outer polymer layer |
| 102 | carrying layer |
| 103 | polyethylene layer |
| 104 | barrier layer |
| 105 | adhesion-promoting layer |
| 106 | inner polymer layer |
| 107 | outer surface of the adhesion-promoting layer |
| 108 | inner surface of the adhesion-promoting layer |
| 109 | first distance |
| 201 | first layer level |
| 202 | second distance |
| 301 | additional layer level |
| 302 | third distance |
| 500 | level |
| 501 | straight line from the outer surface of the adhesion-promoting layer to the inner surface of the adhesion promoting layer |
| 800 | container precursor according to the invention |
| 801 | fold |
| 802 | first folding surface |
| 803 | second folding surface |
| 804 | sealing section |
| 900 | closed container according to the invention |
| 901 | interior space |
| 1000 | process for manufacturing a sheet-like composite according to the invention |

1001 process step a) of the process for manufacturing a sheet-like composite
1002 process step b) of the process for manufacturing a sheet-like composite
1003 process step c) of the process for manufacturing a sheet-like composite
1100 process for manufacturing a container precursor according to the invention
1101 process step a) of the process for producing a container precursor
1102 process step b) of the process for producing a container precursor
1103 process step c) of the process for manufacturing a container precursor
1200 process for producing a container according to the invention
1201 process step a) of the process for producing a container
1202 process step b) of the process for producing a container
1301 process step for filling with a food product

## Claims

**1.** A sheet-like composite (100), comprising as layers of a layer sequence:

a) an outer polymer layer (101),
b) a carrying layer (102) following the outer polymer layer (101),
c) a barrier layer (104) following the carrying layer (102),
d) an adhesion-promoting layer (105) following the barrier layer (104), and
e) an inner polymer layer (106) following the adhesion-promoting layer (105); wherein the adhesion-promoting layer (105) comprises an outer surface (107) of the adhesion-promoting layer and an inner surface (108) of the adhesion-promoting layer; wherein the outer surface (107) of the adhesion-promoting layer

i) is adjacent to the barrier layer (104), and
ii) is **characterised by** a first C=O group absorption maximum;

wherein the inner surface (108) of the adhesion-promoting layer

A) is adjacent to the inner polymer layer (106),
B) is **characterised by** a second C=O group absorption maximum, and
C) has a first distance (109) to the outer surface (107) of the adhesion-promoting layer;

wherein the first C=O group absorption maximum is higher than the second C=O group absorption maximum.

**2.** The sheet-like composite (100) according to claim 1, wherein the adhesion-promoting layer (105) in a first layer level (201) with a second distance (202) from the outer surface (107) of the adhesion-promoting layer has a third C=O group absorption maximum;
wherein the second distance (202) amounts to 5 to 95% of the first distance (109);
wherein the third C=O group absorption maximum

a) is lower than the first C=O group absorption maximum, and
b) is higher than the second C=O group absorption maximum.

**3.** The sheet-like composite (100) according to claim 1 or 2, wherein the first C=O group absorption maximum is in a range from 0.1 to 5.

**4.** The sheet-like composite (100) according to any one of claims 1 to 3, wherein the second C=O group absorption maximum is in a range of more than 0 to 1.

**5.** The sheet-like composite (100) according to any one of claims 2 to 4, wherein the third C=O group absorption maximum is in a range from 0.015 to 4.5.

**6.** The sheet-like composite (100) according to any one of claims 2 to 5, wherein the second distance (202) amounts to 5 to 20% of the first distance (109),
wherein the third C=O group absorption maximum is in a range from 0.05 to 4.5.

**7.** The sheet-like composite (100) according to any one of claims 2 to 5, wherein the second distance (202) amounts to 50 to 95% of the first distance (109),
wherein the third C=O group absorption maximum is in a range from 0.015 to 1.2.

**8.** The sheet-like composite (100) according to any one of claims 2 to 7, wherein the adhesive layer (105) in a further layer plane (301) with a third distance (302) of the adhesion-promoting layer outer surface (107) a fourth C=O group absorption maximum has;
wherein the third distance (302) is longer than the second distance (202);
wherein the fourth C=O group absorption maximum

a) is lower than the third C=O group absorption maximum, and
b) is higher than the second C=O group absorption maximum.

**9.** The sheet-like composite (100) according to any one of the preceding claims, wherein the polymer inner layer (106) contains at least 30 wt.-%, respective to the total weight of the inner polymer layer (106) of a polymer produced by means of a metallocene catalyst.

**10.** The sheet-like composite (100) according to any one of the preceding claims, wherein the carrying layer (102) contains one material selected from the group consisting of cardboard, paperboard, and paper, or a combination of at least two thereof.

**11.** The sheet-like composite (100) according to any one of the preceding claims, wherein the barrier layer (104) comprises one material selected from the group consisting of a plastic, a metal, and a metal oxide, or a combination of at least two thereof.

**12.** A process (1000), comprising as process steps (1001, 1002, 1003):

a) the provision of a composite precursor, comprising as layers of a layer sequence:

i) an outer polymer layer (101),
ii) a carrying layer (102) following the outer polymer layer (101), and
iii) a barrier layer (104) following the carrying layer (102);

b) superimposing an adhesion-promoting layer (105) on the barrier layer (104) on a side facing away from the carrying layer (102);
c) superimposing an inner polymer layer (106) on the adhesion-promoting layer (105) on a side facing away from the barrier layer (104);

wherein the adhesion-promoting layer (105) comprises an outer surface (107) of the adhesion-promoting layer and an inner surface (108) of the adhesion-promoting layer; wherein the outer surface (107) of the adhesion-promoting layer

A) is adjacent to the barrier layer (104), and
B) is **characterised by** a first C=O group absorption maximum;

wherein the inner surface (108) of the adhesion-promoting layer

I) is adjacent to the inner polymer layer (106),
II) is **characterised by** a second C=O group absorption maximum, and
III) has a first distance (109) to the outer surface (107) of the adhesion-promoting layer;

wherein the first C=O group absorption maximum is higher than the second C=O group absorption maximum.

**13.** The process (1000) according to claim 12, wherein the adhesion-promoting layer (105) in a first layer level (201) with a second distance (202) from the outer surface (107) of the adhesion-promoting has a third C=O group absorption maximum; wherein the second distance (202) amounts to 5 to 95% of the first distance (109); wherein the third C=O group absorption maximum

a) is lower than the first C=O group absorption maximum, and
b) is higher than the second C=O group absorption maximum.

**14.** The process (1000) according to claims 12 or 13, wherein in process step b) (1002) or in process step c) (1003) or in both, superimposing comprises an extrusion.

**15.** A container precursor (800) comprising a sheet-like composite (100) according to any one of claims 1 to 11, wherein the sheet-like composite (100) comprises at least one fold (801) with at least two adjoining folding surfaces (802, 803),
wherein at least one partial section (804) of the at least two folding surfaces (802, 803) is joined by sealing with the respective other partial section (804).

**16.** A process (1100), comprising as process steps (1101, 1102, 1103):

a) providing the sheet-like composite (100) according to any one of claims 1 to 11;
b) folding the sheet-like composite (100) to form a fold (801) with at least two adjoining folding surfaces (802, 803); and
c) joining at least one partial section (804) of the at least two folding surfaces (802, 803) with the other partial section (804) by a sealing.

**17.** The process (1100) according to claiml6, wherein the sealing is carried out by one selected from the group consisting of irradiation, contact with a hot solid material, inducing a mechanical vibration, and a contact with a hot gas, or a combination of at least two of them.

**18.** A closed container (900) surrounding an interior space (901), wherein the container (900) comprises the folded sheet-like composite (100) according to any one of claims 1 to 11.

**19.** A use of the sheet-like composite (100) according to any one of the claims 1 to 11 for the production of a container.

**20.** A use of the container (900) according to claims 18 for filling a food product into the container (900).

## Patentansprüche

**1.** Ein flächenförmiger Verbundwerkstoff (100), umfassend als Schichten einer Schichtenfolge:

a) eine äußere Polymerschicht (101),
b) eine Trägerschicht (102), die der äußeren Polymerschicht (101) folgt,
c) eine Sperrschicht (104), die der Trägerschicht (102) folgt,
d) eine der Barriereschicht (104) folgende haftvermittelnde Schicht (105) und
e) eine innere Polymerschicht (106) nach der haftvermittelnden Schicht (105);

wobei die haftvermittelnde Schicht (105) eine Außenfläche (107) der haftvermittelnden Schicht und eine Innenfläche (108) der haftvermittelnden Schicht umfasst;
wobei die Außenfläche (107) der haftvermittelnden Schicht

i) angrenzend an die Barriereschicht (104) ist und
ii) durch ein erstes C=O-Gruppen-Absorptionsmaximum gekennzeichnet ist;

wobei die Innenfläche (108) der haftvermittelnden Schicht

A) angrenzend an die innere Polymerschicht (106) ist,
B) durch ein zweites C=O-Gruppen-Absorptionsmaximum gekennzeichnet ist, und
C) einen ersten Abstand (109) zur Außenfläche (107) der haftvermittelnden Schicht aufweist;

wobei das erste C=O-Gruppen-Absorptionsmaximum höher ist als das zweite C=O-Gruppen-Absorptionsmaximum.

**2.** Der flächenförmige Verbundwerkstoff (100) nach Anspruch 1, wobei die haftvermittelnde Schicht (105) in einer ersten Schichtenebene (201) mit einem zweiten Abstand (202) von der Außenfläche (107) der haftvermittelnden Schicht ein drittes C=O-Gruppen-Absorptionsmaximum aufweist;
wobei der zweite Abstand (202) 5 bis 95% des ersten Abstandes (109) beträgt;
wobei das dritte C=O-Gruppen-Absorptionsmaximum

a) niedriger ist als das erste C=O-Gruppen-Absorptionsmaximum, und
b) höher ist als das zweite C=O-Gruppen-Absorptionsmaximum.

**3.** Der flächenförmige Verbundwerkstoff (100) nach Anspruch 1 oder 2, wobei das erste C=O-Gruppen-Absorptionsmaximum in einem Bereich von 0,1 bis 5 liegt.

**4.** Der flächenförmige Verbundwerkstoff (100) nach einem der Ansprüche 1 bis 3, worin das zweite C=O-Gruppen-Absorptionsmaximum in einem Bereich von mehr als 0 bis 1 liegt.

**5.** Der flächenförmige Verbundwerkstoff (100) nach einem der Ansprüche 2 bis 4, worin das dritte C=O-Gruppenabsorptionsmaximum in einem Bereich von 0,015 bis 4,5 liegt.

**6.** Der flächenförmige Verbundwerkstoff (100) nach einem der Ansprüche 2 bis 5, wobei der zweite Abstand (202) 5 bis 20% des ersten Abstandes (109) beträgt, wobei das dritte C=O-Gruppen-Absorptionsmaximum in einem Bereich von 0,05 bis 4,5 liegt.

**7.** Der flächenförmige Verbundwerkstoff (100) nach einem der Ansprüche 2 bis 5, wobei der zweite Abstand (202) 50 bis 95% des ersten Abstandes (109) beträgt, wobei das dritte C=O-Gruppen-Absorptionsmaximum in einem Bereich von 0,015 bis 1,2 liegt.

**8.** Der flächenförmige Verbundwerkstoff (100) nach einem der Ansprüche 2 bis 7, wobei die Klebeschicht (105) in einer weiteren Schichtenebene (301) mit einem dritten Abstand (302) von der haftvermittelnden Schichtaußenfläche (107) ein viertes C=O-Gruppenabsorptionsmaximum aufweist;
wobei der dritte Abstand (302) länger ist als der zweite Abstand (202);
wobei das vierte C=O-Gruppen-Absorptionsmaximum

a) niedriger ist als das dritte C=O-Gruppen-Absorptionsmaximum, und
b) höher ist als das zweite C=O-Gruppen-Absorptionsmaximum.

**9.** Der flächenförmige Verbundwerkstoff (100) nach einem der vorstehenden Ansprüche, worin die polymere Innenschicht (106) mindestens 30 Gew.-%, bezogen auf das Gesamtgewicht der inneren Polymerschicht (106), eines Polymers enthält, das mittels eines Metallocenkatalysators hergestellt wurde.

**10.** Der flächenförmige Verbundwerkstoff (100) nach einem der vorstehenden Ansprüche, worin die Trägerschicht (102) ein Material enthält, das aus der Gruppe ausgewählt ist, die aus Karton, Pappe und Papier oder einer Kombination von mindestens zwei davon besteht.

**11.** Der flächenförmige Verbundwerkstoff (100) nach einem der vorstehenden Ansprüche, worin die Barriereschicht (104) ein Material umfasst, das aus der Gruppe ausgewählt ist, die aus einem Kunststoff, einem Metall und einem Metalloxid oder einer Kombination von mindestens zwei davon besteht.

**12.** Ein Verfahren (1000), umfassend als Prozessschritte (1001, 1002, 1003):

a) die Bereitstellung eines Verbundvorläufers, der als Schichten einer Schichtenfolge umfasst:

i) eine äußere Polymerschicht (101),
ii) eine Trägerschicht (102), die der äußeren Polymerschicht (101) folgt, und
iii) eine Barriereschicht (104), die der Trägerschicht (102) folgt;

b) Aufbringen einer haftvermittelnden Schicht (105) auf die Barriereschicht (104) auf einer von der Trägerschicht (102) abgewandten Seite;
c) Überlagern einer inneren Polymerschicht (106) auf der haftvermittelnden Schicht (105) auf einer von der Sperrschicht (104) abgewandten Seite;

wobei die haftvermittelnde Schicht (105) eine Außenfläche (107) der haftvermittelnden Schicht und eine Innenfläche (108) der haftvermittelnden Schicht umfasst;
wobei die Außenfläche (107) der haftvermittelnden Schicht

A) angrenzend an die Barriereschicht (104) ist und
B) ist **gekennzeichnet durch** ein erstes C=O-Gruppen-Absorptionsmaximum;

wobei die Innenfläche (108) der haftvermittelnden Schicht

I) angrenzend an die innere Polymerschicht (106) ist,
II) durch ein zweites C=O-Gruppen-Absorptionsmaximum gekennzeichnet ist, und
III) einen ersten Abstand (109) zur Außenfläche (107) der haftvermittelnden Schicht aufweist;

wobei das erste C=O-Gruppen-Absorptionsmaximum höher ist als das zweite C=O-Gruppen-Absorptionsmaximum.

**13.** Das Verfahren (1000) nach Anspruch 12, wobei die haftvermittelnde Schicht (105) in einer ersten Schichtstufe (201) mit einem zweiten Abstand (202) von der Außenfläche (107) der haftvermittelnden Schicht ein drittes C=O-Gruppen-Absorptionsmaximum aufweist;
wobei der zweite Abstand (202) 5 bis 95% des ersten Abstandes (109) beträgt;
wobei das dritte C=O-Gruppen-Absorptionsmaximum

a) niedriger ist als das erste C=O-Gruppen-Absorptionsmaximum, und
b) höher ist als das zweite C=O-Gruppen-Absorptionsmaximum.

**14.** Das Verfahren (1000) nach den Ansprüchen 12 oder 13, wobei im Verfahrensschritt b) (1002) oder im Verfahrensschritt c) (1003) oder in beiden das Überlagern eine Extrusion umfasst.

**15.** Ein Behälter-Vorläufer (800), umfassend ein flächenförmiges Verbundmaterial (100) nach einem der Ansprüche 1 bis 11,
wobei der flächenförmige Verbund (100) mindestens eine Faltung (801) mit mindestens zwei angrenzenden Falzflächen (802, 803) umfasst,
wobei mindestens ein Teilabschnitt (804) der mindestens zwei Falzflächen (802, 803) durch Abdichtung mit dem jeweils anderen Teilabschnitt (804) verbunden ist.

**16.** Ein Verfahren (1100), umfassend als Prozessschritte (1101, 1102, 1103):

a) Bereitstellen des flächenförmigen Verbundes (100) nach einem der Ansprüche 1 bis 11;
b) Falten des flächenförmigen Verbundes (100), um eine Faltung (801) mit mindestens zwei angrenzenden Falzflächen (802, 803) zu bilden; und
c) Verbinden mindestens eines Teilabschnitts (804) der mindestens zwei Falzflächen (802, 803) mit dem anderen Teilabschnitt (804) durch eine Dichtung.

**17.** Das Verfahren (1100) nach Anspruch 16, wobei die Abdichtung durch eine aus der Gruppe bestehend aus Bestrahlung, Kontakt mit einem heißen festen Material, Induzierung einer mechanischen Vibration und Kontakt mit einem heißen Gas oder einer Kombination von mindestens zwei von ihnen durchgeführt wird.

**18.** Ein geschlossener Behälter (900), der einen Innenraum (901) umgibt, wobei der Behälter (900) den gefalteten flächenförmigen Verbund (100) nach einem der Ansprüche 1 bis 11 umfasst.

**19.** Eine Verwendung des flächenförmigen Verbundes (100) nach einem der Ansprüche 1 bis 11 zur Herstellung eines Behälters.

**20.** Eine Verwendung des Behälters (900) nach Anspruch 18 zum Abfüllen eines Lebensmittelprodukts in den Behälter (900).

## Revendications

1. Composite en forme de feuille (100), comprenant comme couches d'une séquence de couches :

    a) une couche extérieure de polymère (101),
    b) une couche de support (102) suivant la couche polymère extérieure (101),
    c) une couche barrière (104) suivant la couche de support (102),
    d) une couche favorisant l'adhérence (105) suivant la couche barrière (104), et
    e) une couche interne de polymère (106) suivant la couche favorisant l'adhérence (105) ;

    dans laquelle la couche favorisant l'adhérence (105) comprend une surface externe (107) de la couche favorisant l'adhérence et une surface interne (108) de la couche favorisant l'adhérence ;
    dans laquelle la surface extérieure (107) de la couche favorisant l'adhérence

    i) est adjacent à la couche barrière (104), et
    ii) est **caractérisé par** un premier maximum d'absorption du groupe C=O ;

    dans laquelle la surface interne (108) de la couche favorisant l'adhérence

    A) est adjacent à la couche de polymère interne (106),
    B) est **caractérisé par** un second maximum d'absorption du groupe C=O, et
    C) présente une première distance (109) par rapport à la surface extérieure (107) de la couche favorisant l'adhérence ;

    dans laquelle le premier maximum d'absorption de groupe C=O est supérieur au second maximum d'absorption de groupe C=O.

2. Composite en forme de feuille (100) selon la revendication 1, dans lequel la couche favorisant l'adhérence (105) dans un premier niveau de couche (201) avec une seconde distance (202) de la surface extérieure (107) de la couche favorisant l'adhérence a une troisième absorption maximale du groupe C=O ;
    dans laquelle la seconde distance (202) représente 5 à 95 % de la première distance (109) ;
    dans laquelle le troisième maximum d'absorption de groupe C=O

    a) est inférieur au premier maximum d'absorption du groupe C=O, et
    b) est supérieur au deuxième maximum d'absorption du groupe C=O.

3. Composite en forme de feuille (100) selon la revendication 1 ou 2, dans lequel le premier maximum d'absorption du groupe C=O est compris entre 0,1 et 5.

4. Composite en forme de feuille (100) selon l'une quelconque des revendications 1 à 3, dans lequel le second maximum d'absorption du groupe C=O se situe dans une plage supérieure à 0 à 1.

5. Composite en forme de feuille (100) selon l'une quelconque des revendications 2 à 4, dans lequel le troisième maximum d'absorption du groupe C=O est compris entre 0,015 et 4,5.

6. Composite en forme de feuille (100) selon l'une quelconque des revendications 2 à 5, dans lequel la seconde distance (202) représente 5 à 20 % de la première distance (109),
    dans laquelle le troisième maximum d'absorption du groupe C=O est compris entre 0,05 et 4,5.

7. Composite en forme de feuille (100) selon l'une quelconque des revendications 2 à 5, dans lequel la seconde distance (202) représente 50 à 95% de la première distance (109),
    dans laquelle le troisième maximum d'absorption du groupe C=O est compris entre 0,015 et 1,2.

8. Composite en forme de feuille (100) selon l'une quelconque des revendications 2 à 7, dans lequel la couche adhésive (105) dans un autre plan de couche (301) avec une troisième distance (302) de la surface extérieure (107) de la couche favorisant l'adhérence présente une quatrième absorption maximale du groupe C=O ;
    dans laquelle la troisième distance (302) est plus longue que la deuxième distance (202);
    dans laquelle le quatrième C=O maximum d'absorption du groupe

a) est inférieur au troisième maximum d'absorption du groupe C=O, et
b) est supérieur au deuxième maximum d'absorption du groupe C=O.

**9.** Composite en forme de feuille (100) selon l'une quelconque des revendications précédentes, dans lequel la couche interne de polymère (106) contient au moins 30 % en poids, par rapport au poids total de la couche interne de polymère (106), d'un polymère produit au moyen d'un catalyseur métallocène.

**10.** Composite en forme de feuille (100) selon l'une quelconque des revendications précédentes, dans lequel la couche de support (102) contient un matériau choisi dans le groupe consistant en cartonnage, carton et papier, ou une combinaison d'au moins deux de ceux-ci.

**11.** Composite en forme de feuille (100) selon l'une quelconque des revendications précédentes, dans lequel la couche barrière (104) comprend un matériau choisi dans le groupe constitué par une matière plastique, un métal et un oxyde métallique, ou une combinaison d'au moins deux de ceux-ci.

**12.** Procédé (1000), comprenant comme étapes de procédé (1001, 1002, 1003) :

a) mettre à disposition d'un précurseur composite, comprenant comme couches d'une séquence de couches :

i) une couche externe de polymère (101),
ii) une couche de support (102) suivant la couche de polymère externe (101), et
iii) une couche barrière (104) suivant la couche de support (102) ;

b) la superposition d'une couche favorisant l'adhérence (105) sur la couche barrière (104) sur un côté opposé à la couche de support (102) ;
c) la superposition d'une couche interne de polymère (106) sur la couche favorisant l'adhérence (105) sur un côté opposé à la couche barrière (104) ;

dans laquelle la couche favorisant l'adhérence (105) comprend une surface externe (107) de la couche favorisant l'adhérence et une surface interne (108) de la couche favorisant l'adhérence ;
dans laquelle la surface extérieure (107) de la couche favorisant l'adhérence

A) est adjacent à la couche barrière (104), et
B) est **caractérisé par** un premier maximum d'absorption du groupe C=O ;

dans laquelle la surface interne (108) de la couche favorisant l'adhérence

I) est adjacent à la couche interne de polymère (106),
II) est **caractérisé par** un second maximum d'absorption du groupe C=O, et
III) présente une première distance (109) par rapport à la surface extérieure (107) de la couche favorisant l'adhérence ;

dans laquelle le premier maximum d'absorption de groupe C=O est supérieur au second maximum d'absorption de groupe C=O.

**13.** Procédé (1000) selon la revendication 12, dans lequel la couche favorisant l'adhérence (105) dans un premier niveau de couche (201) avec une deuxième distance (202) de la surface extérieure (107) du promoteur d'adhérence a un troisième maximum d'absorption de groupe C=O ;
dans laquelle la seconde distance (202) représente 5 à 95 % de la première distance (109) ;
dans laquelle le troisième maximum d'absorption de groupe C=O

a) est inférieur au premier maximum d'absorption du groupe C=O, et
b) est supérieur au deuxième maximum d'absorption du groupe C=O.

**14.** Procédé (1000) selon les revendications 12 ou 13, dans lequel, dans l'étape de procédé b) (1002) ou dans l'étape de procédé c) (1003) ou dans les deux, la superposition comprend une extrusion.

**15.** Précurseur de récipient (800) comprenant un composite en forme de feuille (100) selon l'une quelconque des revendications 1 à 11,
dans laquelle le composite en forme de feuille (100) comprend au moins un pli (801) avec au moins deux surfaces de pliage adjacentes (802, 803),
dans laquelle au moins une section partielle (804) des au moins deux surfaces de pliage (802, 803) est reliée par étanchéité avec l'autre section partielle respective (804).

**16.** Procédé (1100), comprenant comme étapes de procédé (1101, 1102, 1103) :

a) fournir le composite en forme de feuille (100) selon l'une quelconque des revendications 1 à 11 ;
b) plier le composite en feuille (100) pour former un pli (801) avec au moins deux surfaces de pliage adjacentes (802, 803) ; et
c) joindre au moins une section partielle (804) des au moins deux surfaces de pliage (802, 803) avec l'autre section partielle (804) par un joint.

**17.** Procédé (1100) selon la revendication 16, dans lequel l'étanchéité est réalisée par un joint choisi dans le groupe constitué par l'irradiation, le contact avec un matériau solide chaud, induisant une vibration mécanique, et un contact avec un gaz chaud, ou une combinaison d'au moins deux de ces éléments.

**18.** Récipient fermé (900) entourant un espace intérieur (901), dans lequel le récipient (900) comprend le composite en forme de feuille pliée (100) selon l'une quelconque des revendications 1 à 11.

**19.** Utilisation du composite en forme de feuille (100) selon l'une quelconque des revendications 1 à 11 pour la production d'un récipient.

**20.** Utilisation du récipient (900) selon la revendication 18 pour remplir un produit alimentaire dans le récipient (900).

Figure 1

100

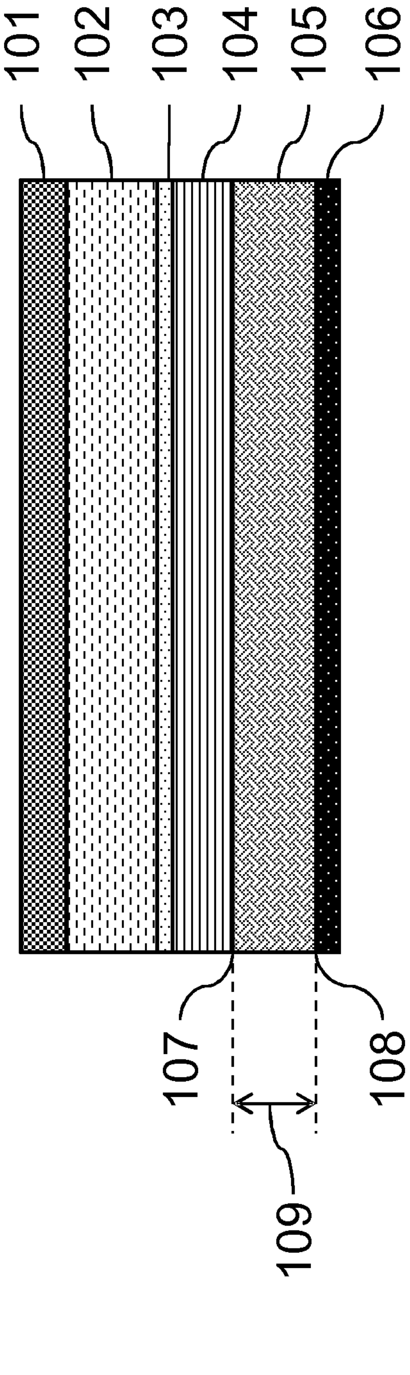

Figure 2

100

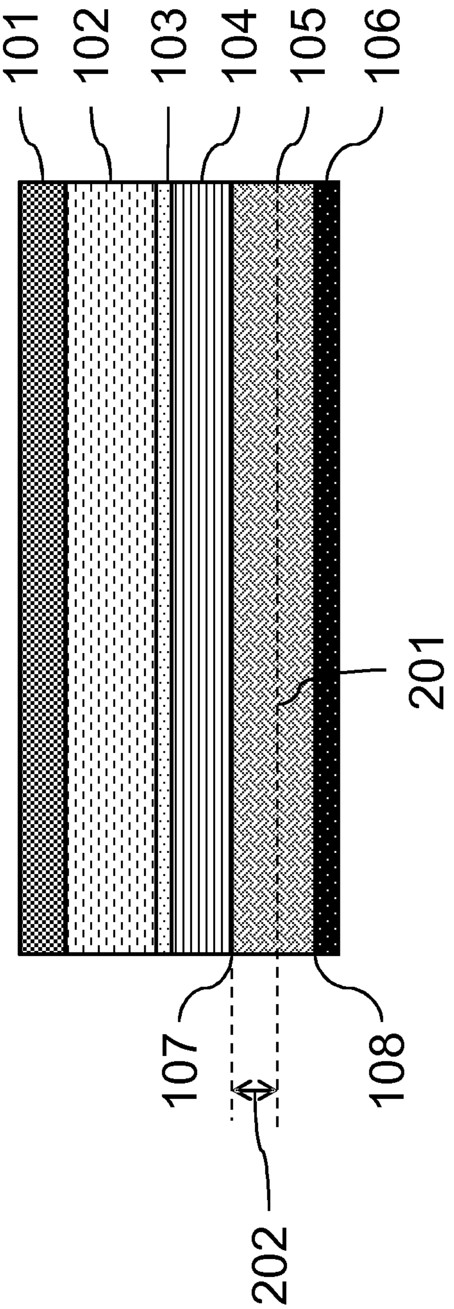

Figure 3

100

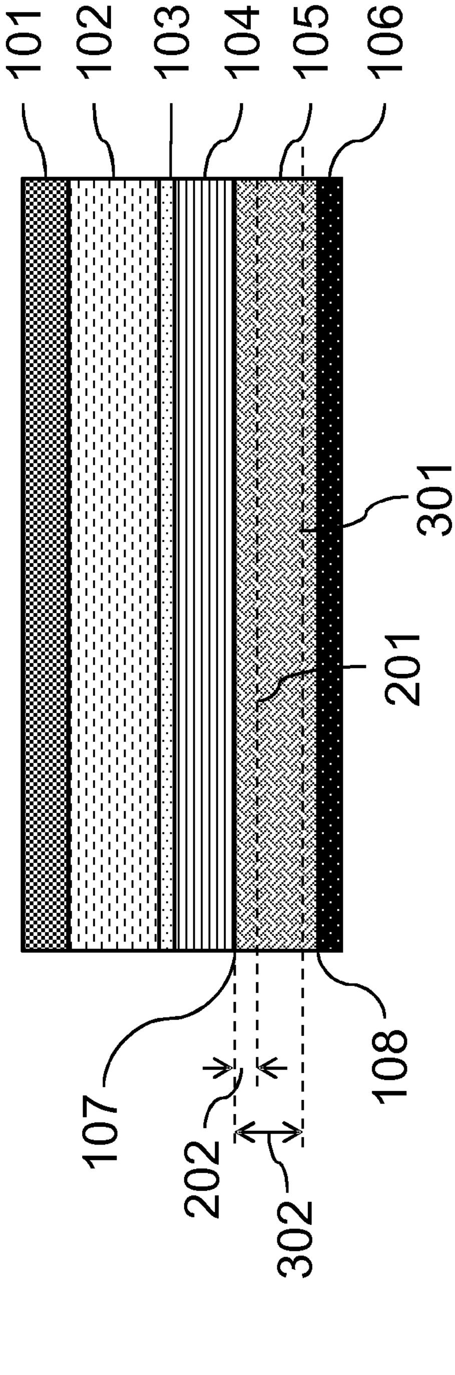

Figure 4

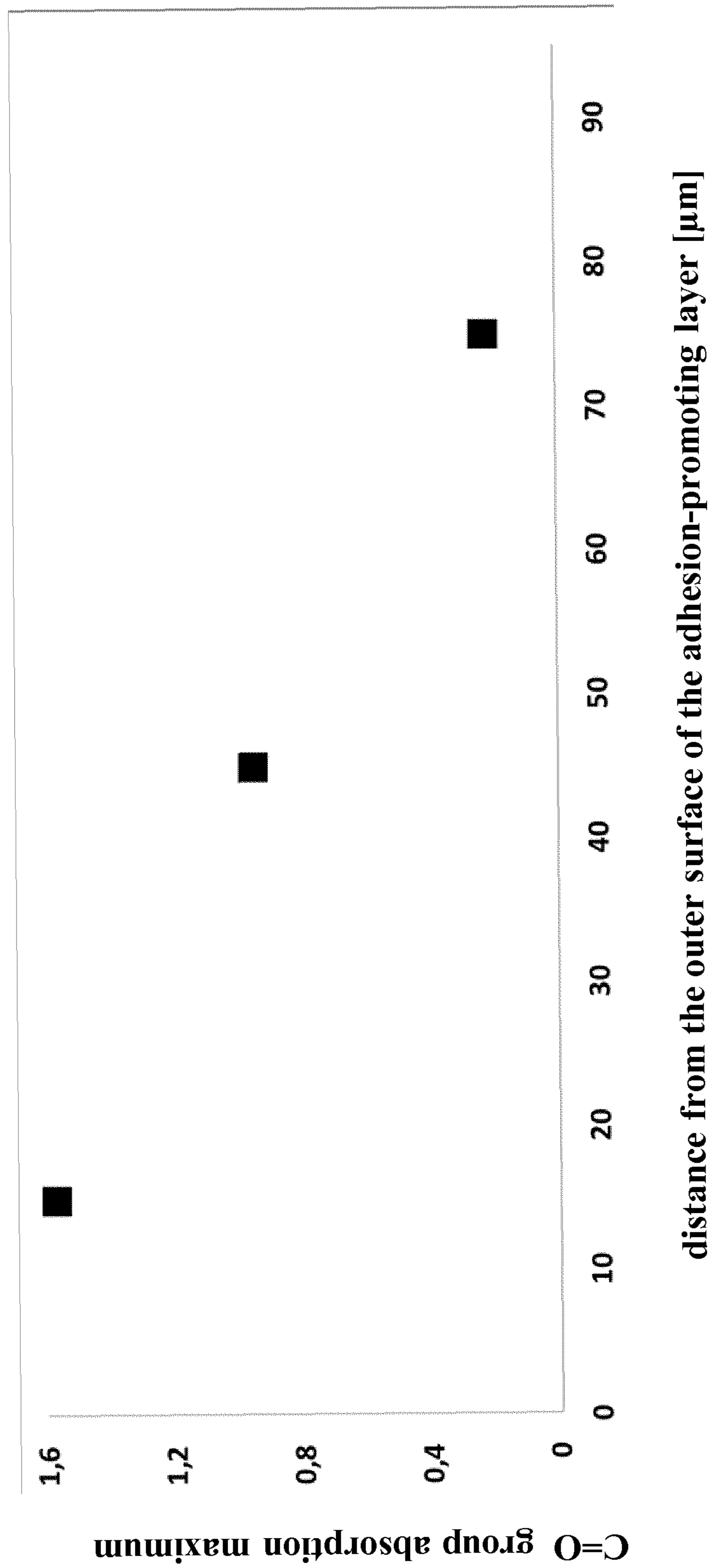
C=O group absorption maximum
0
0,4
0,8
1,2
1,6
0
10
20
30
40
50
60
70
80
90
distance from the outer surface of the adhesion-promoting layer [µm]

Figure 5

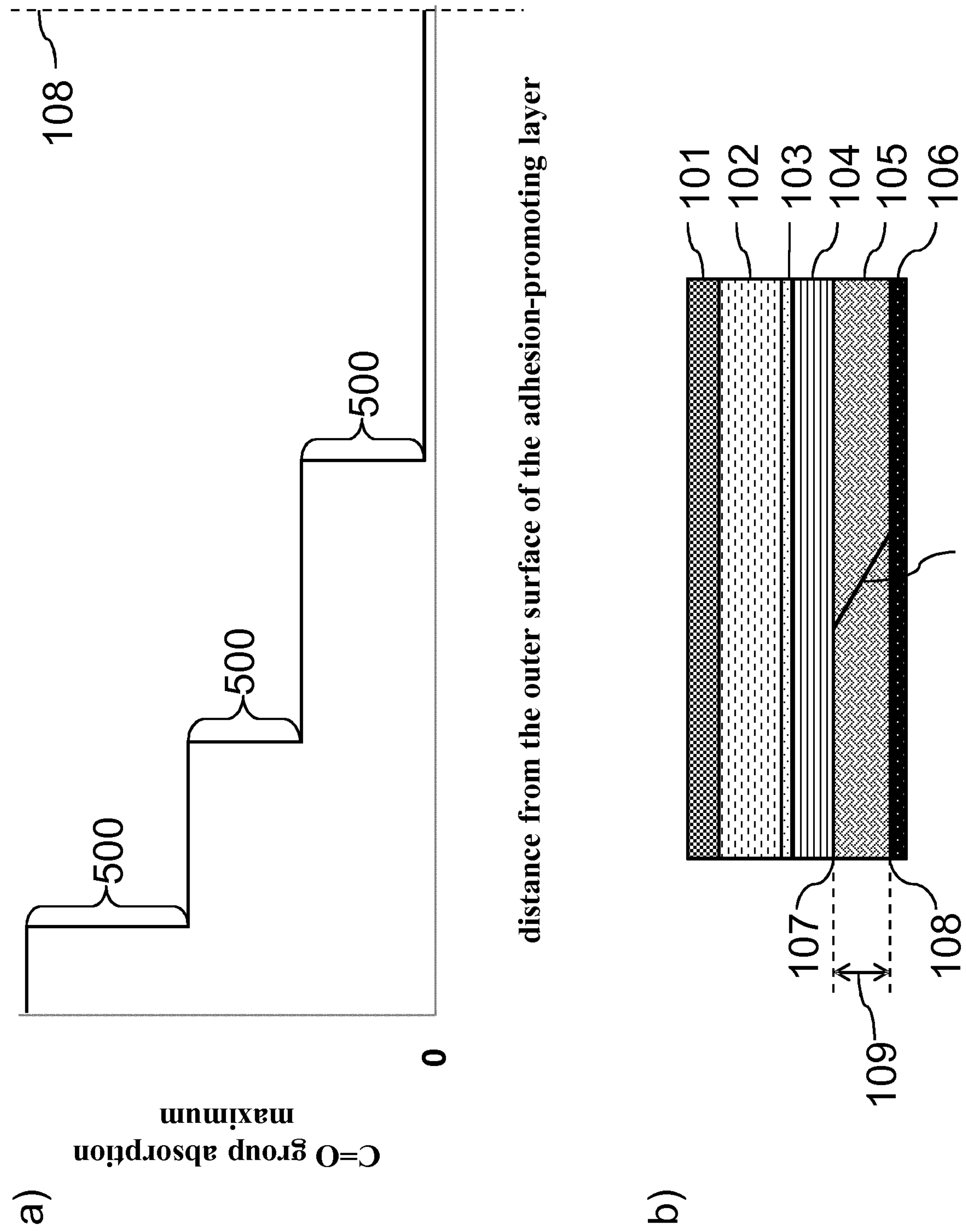
a)
C=O group absorption maximum
0
500
500
500
108
distance from the outer surface of the adhesion-promoting layer
b)
101
102
103
104
105
106
107
108
109
501

Figure 6

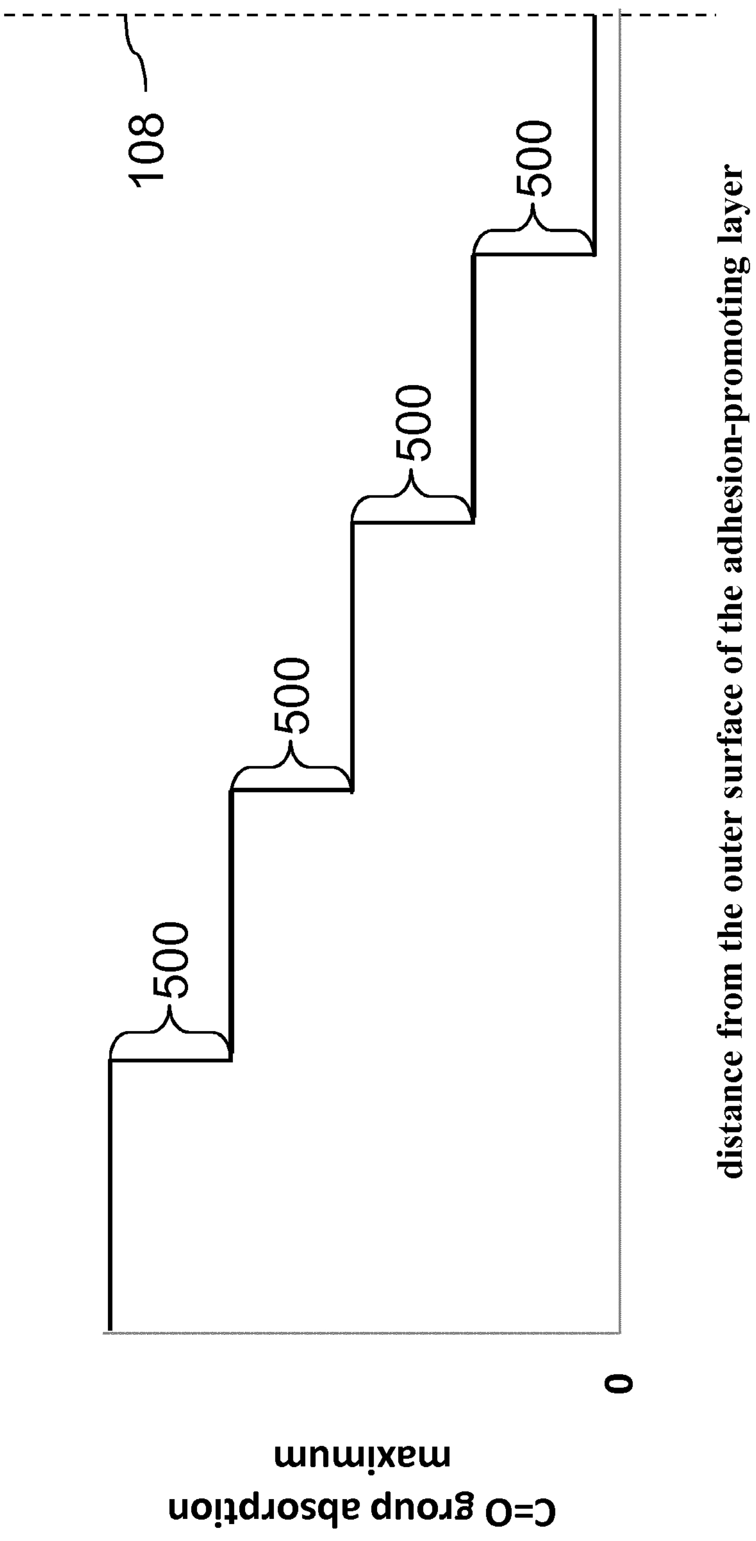
108
500
500
500
500
0
C=O group absorption maximum
distance from the outer surface of the adhesion-promoting layer

Figure 7

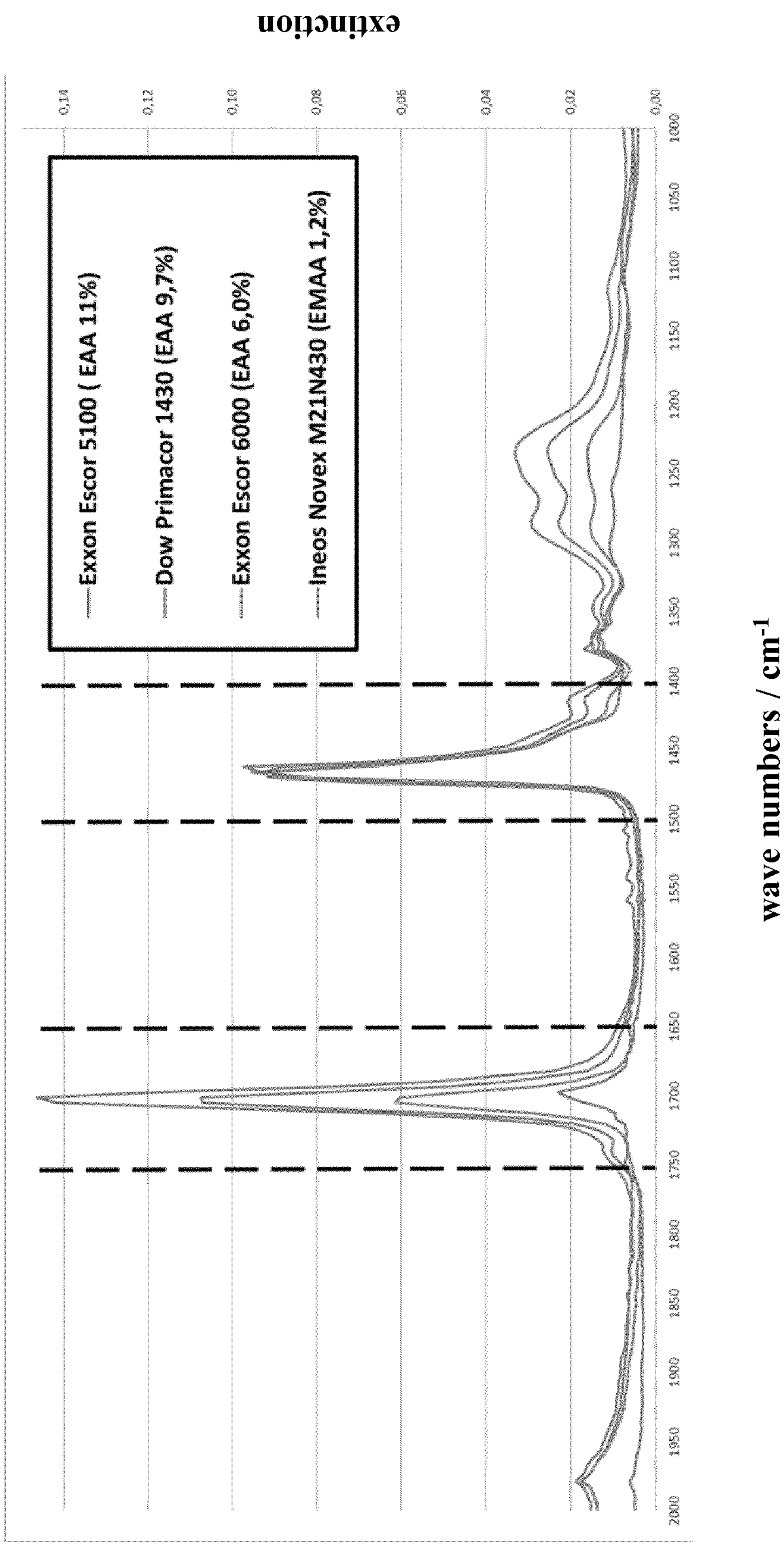
extinction
wave numbers / cm-1
Exxon Escor 5100 ( EAA 11%)
Dow Primacor 1430 (EAA 9,7%)
Exxon Escor 6000 (EAA 6,0%)
Ineos Novex M21N430 (EMAA 1,2%)

Figure 8

800

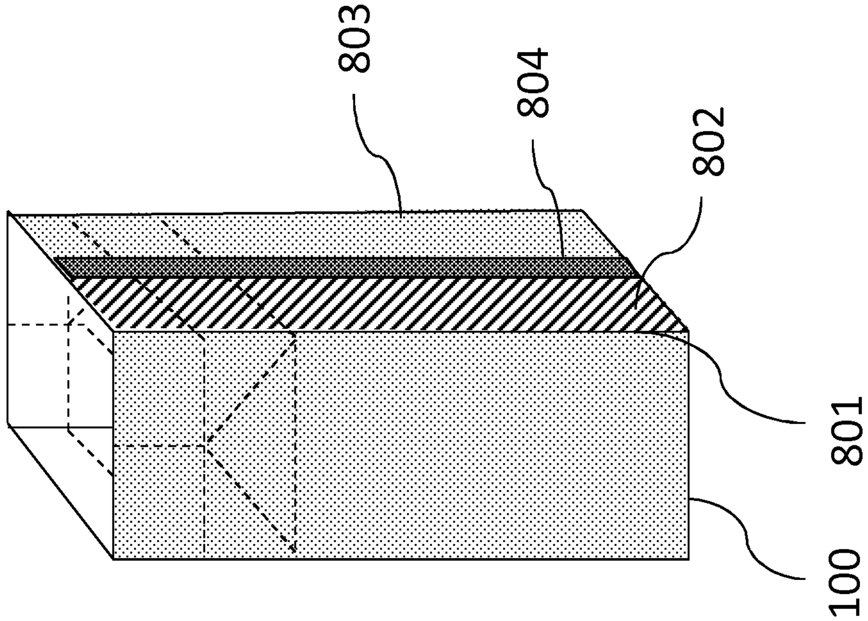

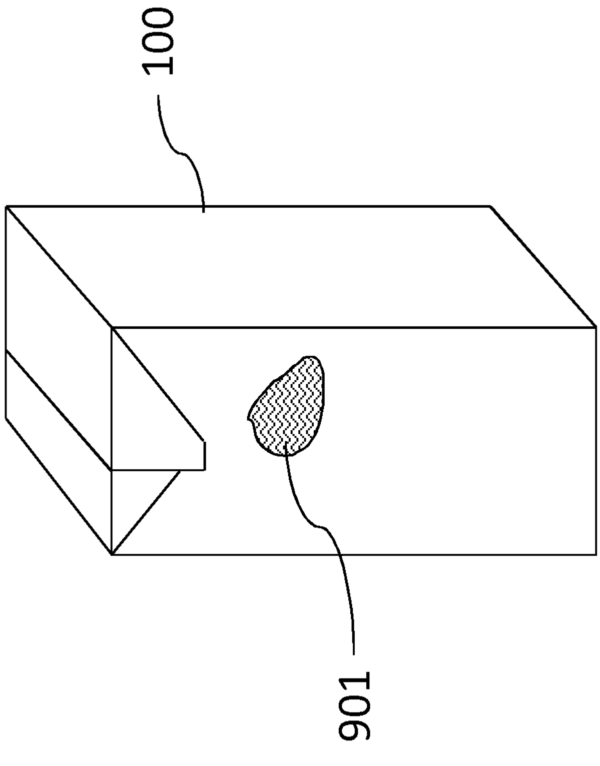


Figure 9
900

Figure 10

1000

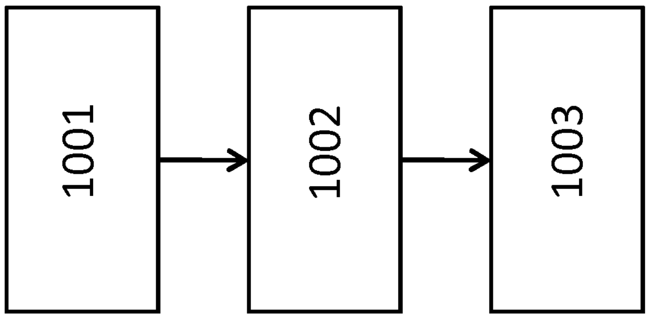

Figure 11
1100

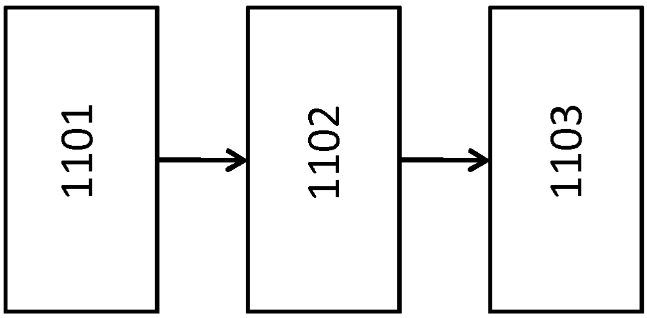

Figure 12

1200

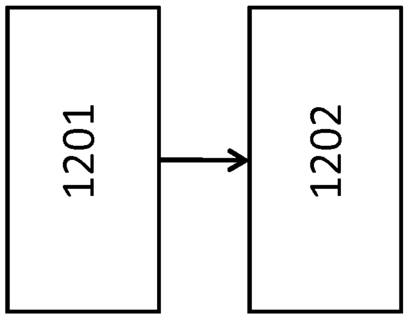

Figure 13

1200

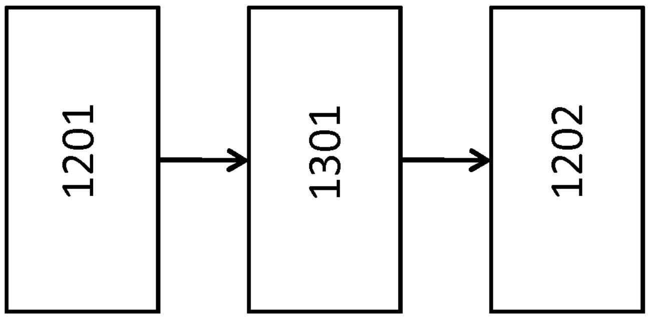

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9009926 A2
- DE 102010033466 B4
- WO 9826994 A1